# EUROPEAN PATENT SPECIFICATION

(11) **EP 1 118 174 B1**
(45) Date of publication and mention of the grant of the patent: **24.11.2004**
(21) Application number: 99951692.5
(22) Date of filing: 29.09.1999
(51) Int. Cl.: H04B 7/185

(54) **APPARATUS AND METHOD FOR SENDING COMMON INFORMATION ON COMMON DATA CHANNELS**
GERÄT UND VERFAHREN ZUM SENDEN VON GEMEINSAMEN NACHRICHTEN ÜBER GEMEINSAME KANÄLE
APPAREIL ET PROCEDE PERMETTANT D'ENVOYER UNE INFORMATION COMMUNE SUR DES CANAUX DE DONNEES COMMUNES

(30) Priority: 30.09.1998 US 163851
(43) Date of publication of application: 25.07.2001
(73) Proprietor: QUALCOMM INCORPORATED, San Diego, CA 92121-1714 (US)
(72) Inventor: SCHIFF, Leonard, N., San Diego, CA 92130 (US)
(74) Representative: Walsh, Michael Joseph
(86) International application number: PCT/US1999/022821
(87) International publication number: WO 2000/019639

(56) References cited:
- EP-A- 0 687 076
- EP-A- 0 748 066
- EP-A- 0 808 034
- EP-A- 0 828 353
- US-A- 4 115 759
- US-A- 5 506 886

## Description

### BACKGROUND OF THE INVENTION

### I. Field of the Invention

The present invention relates generally to satellite communication systems, and more particularly, to an apparatus and method for sending common information to user terminals within a relatively small geographic area using a satellite-based communication system.

### II. Related Art

Conventional satellite-based communication systems include gateways and one or more satellites to relay communication signals between the gateways and one or more user terminals. A gateway is an earth station having an antenna for transmitting signals to, and receiving signals from, communication satellites. A gateway provides communication links, using satellites, for connecting a user terminal to other user terminals or users of other communication systems, such as a public switched telephone network. A satellite is an orbiting receiver, repeater and regenerator used to relay information. A user terminal is a wireless communication device such as, but not limited to, a cellular telephone, a data transceiver, and a paging receiver. A user terminal can be fixed, portable, or mobile, such as a mobile telephone.

A satellite can receive signals from and transmit signals to a user terminal provided the user terminal is within the "footprint" of the satellite. The footprint of a satellite is the geographic region on the surface of the Earth within the range of signals of the satellite. The footprint is usually geographically divided into "beams," through the use of beam-forming antennas. Each beam covers a particular geographic region within the footprint. Beams may be directed so that more than one beam from the same satellite covers the same specific geographic region.

Some satellite communications systems employ code division multiple access (CDMA) spread-spectrum signals, as disclosed in U.S.-A-4,901,307, issued February 13, 1990, entitled *"Spread Spectrum Multiple Access Communication System Using Satellite or Terrestrial Repeaters,"* and U.S. Patent No. 5,691,974, filed January 4, 1995, entitled *"Method and Apparatus for Using Full Spectrum Transmitted Power in a Spread Spectrum Communication System for Tracking Individual Recipient Phase Time and Energy,"* both of which are assigned to the assignee of the present invention.

In satellite communication systems employing CDMA, separate communication links are used to transmit communication signals, such as data or traffic, to and from a gateway. The term "forward communication link" refers to communication signals originating at the gateway and transmitted to a user terminal. The term "reverse communication link" refers to communication signals originating at a user terminal and transmitted to the gateway.

On the forward link, information is transmitted from a gateway to a user terminal over one or more beams. These beams often comprise a number of so-called sub-beams (also referred to as frequency division multiple access (FDMA) channels) covering a common geographic area, each occupying a different frequency band. More specifically, in a conventional spread-spectrum communication system, one or more preselected pseudorandom noise (PN) code sequences are used to modulate or "spread" user information signals over a predetermined spectral band prior to modulation onto a carrier signal for transmission as communication signals. PN spreading is a method of spread-spectrum transmission that is well known in the art, and produces a communication signal with a bandwidth much greater than that of the data signal. On the forward link, PN spreading codes or binary sequences are used to discriminate between signals transmitted by different gateways or over different beams, as well as between multipath signals. These codes are often shared by all communication signals within a given sub-beam.

In a conventional CDMA spread-spectrum communication system, "channelizing" codes are used to discriminate between different user terminals within a satellite sub-beam on a forward link. That is, each user terminal has its own orthogonal channel provided on the forward link by using a unique channelizing orthogonal code. Walsh functions are generally used to implement the channelizing codes, also known as Walsh codes. The channelizing codes divide a sub-beam into orthogonal channels, also known as Walsh channels or CDMA channels. A majority of the Walsh channels are traffic channels that provide messaging between a user terminal and a gateway. The remaining Walsh channels often include pilot, sync, and paging channels. Signals sent over the traffic channels are meant to be received by only one user terminal. In contrast, paging, sync, and pilot channels may be monitored by multiple user terminals.

On the reverse link, a user terminal transmits information to a gateway. More specifically, the user terminal transmits information to a satellite over a user terminal-to-satellite uplink. When the satellite receives signals from the user terminal, the satellite frequency division multiplexes the signals and forwards the signals to the gateway over a satellite-to-gateway feeder link. Each channel in a beam of the feeder link is frequency division multiplexed to a different frequency. The reverse link often includes traffic channels and access channels. The traffic channels provide messaging between a user terminal and a gateway. The access channels are usually used by a user terminal to register with a gateway, to place a call, or to acknowledge a paging request by a gateway.

United States Patent No. 5, 506, 886 describes a method and system for wide area paging with roaming subscribing units. Conventional paging systems experience a problem related to a limited range. A paging system works only when its pager resides within the area covered by the system transmitters. When subscribers travel outside this area, their pagers cannot receive calls. Related problems are limited information transmission capacity for delivering pages and acquiring a prior knowledge of a pager's location. US 5, 506, 886 discloses a wide area paging system, in which a roaming user places a phone call to only a single phone number, regardless of the coverage area into which the user has travelled. The user provides location information to the paging system. A roaming subscriber unit is also disclosed for use in connection with a paging system in which a plurality of similar subscriber units are responsive to coded radio transmissions. The radio transmissions are broadcast from a plurality of transmitters, each of which serves a prescribed geographical area. The subscriber units roam between these areas.

Satellite communication systems are often used for two way communications between a pair of users. Two way communication systems utilize both the forward link and the reverse link. Satellite communication systems may also provide one way communications. The Global Positioning System (GPS) is an example of a satellite communications system used for one way communications. The GPS is a system of navigation satellites intended to allow position determination by receivers anywhere on or near the Earth's surface. The GPS provides a moderate accuracy signal (50m-100m) for general navigation. A GPS receiver receives information from the satellites without providing any feedback to the satellites.

Users, such as surveyors, often use GPS receivers for location determination. However, the accuracy of a GPS receiver is limited by estimations made by the GPS system and/or receiver. More specifically, conventional GPS systems and/or receivers assume a blanket or average ionospheric signal delay value when in reality values of ionospheric delay are dynamic and are only accurate for a geographic region having a diameter of approximately 100 miles. One beam of a satellite can cover a geographic region on the surface of the Earth that is approximately 1000 miles in diameter. Thus, the ionospheric delay values at one moment in time within even one of the multiple beams (for example, 16 beams) of a satellite footprint are different. That is, assuming the beam covers an area approximately 1000 miles in diameter, within the one beam there may be approximately 100 different values of ionospheric delay for any one moment in time. Thus, there is a need to provide updated and timely information to users within a relatively small geographic region (for example, 100 miles in diameter).

Examples of other types of time sensitive information that are important to users within a relatively small geographic region include highway traffic information and weather information.

A satellite is powered by batteries which store solar energy collected by the satellite's solar panels. The satellite processes and relays signals using this stored energy. If the satellite uses more power than necessary to process and relay each signal, then less power is available for handling additional signals. Also, the energy removed from the battery in order to process and relay traffic must be replenished during the charging time when the satellite is in the sun. If too much energy is removed to process the traffic, the satellite must tap the batteries' reserve power. The operating life of the battery is degraded when the battery reserve power is accessed. Additionally, undesirable interference caused by a signal increases as the power of the signal increases. Thus, it is often desirable to use a minimum amount of satellite power necessary to process and relay signals. More specifically, it is often desirable to operate a channel at the lowest power that enables a user terminal in the poorest reception location to receive the signal.

Thus, there is a need for a system and method for transmitting common information to a group of users located within a relatively small geographic area (for example, an area 100 miles in diameter) using low power. The system and method should be capable of transmitting common information that is specific to the relatively small geographic region. The system and method should also be capable of updating the common information as it changes. As discussed above, an example of users are surveyors, and an example of common information needed by surveyors is ionospheric delay information.

Another example of users are military personnel. An additional example of common information includes troop deployment commands that are used by military personnel to coordinate troop movements. Because this type of information is usually sensitive, it should be available only to authorized users. Thus, the system and method for transmitting common information should be capable of limiting use of the common information to authorized users. Even if the common information is not sensitive, it can be beneficial to limit the use of common information to only those users who pay to receive the common information. Other types of common information include highway traffic reports, news tailored to a geographic region, disaster information, and the like.

Where information is specific to a first geographic region, all users (for example, surveyors) within the first geographic region that request the same type of information (for example, ionospheric delay values) should receive the same relevant information. When additional users within a second geographic region request the same type of information (for example, ionospheric delay values), these additional users should receive information relevant to the second geographic region. That is, there is a need that the system and method for transmitting common information be capable of transmitting first common information to a plurality of users within a first region (for example, a region 100 miles in diameter), while simultaneously transmitting second common information to a plurality of users within a second region (for example, another region 100 miles in diameter). These first and second regions may or may not be contiguous.

In order to conserve capacity and power, the system and method should transmit common information in a manner that enables all authorized users within a specific geographic region to receive the common information from the same channels. Additionally, where possible the system should use a minimal amount of power for the channels used to transmit the common information to thereby conserve power and reduce channel interference.

### SUMMARY OF THE INVENTION

The present invention is directed toward a method and apparatus for transmitting common information to a plurality of user terminals within a geographic region. The method and apparatus are useful in a system where transmitters are moving on a scheduled basis and illuminating different regions on the surface of the Earth at different points in time. More specifically, the method and apparatus are useful in a satellite communication system having a gateway and a plurality of satellites that orbit such that they are not stationary with respect to a point on the surface of the Earth.

The method includes the step of generating a list identifying a plurality of common data channels over which the common information will be transmitted. The list can include, for each of the plurality of common data channels, information identifying a predetermined satellite, beam, frequency, and channel. As satellites orbit, a beam covering a geographic region at one point in time will no longer cover that geographic region at a second point in time. Thus, due to the orbiting of the satellites, the list changes over time. The method also includes the step of transmitting, from the gateway to the geographic region, the common information on the plurality of common data channels. Additionally, the method includes receiving, at a user terminal, the common information over at least one of the plurality of common data channels.

The user terminal registers with the gateway. In response to the registration, the gateway sends the user terminal the identity of one or more common data channels. Using the identity of one or more common data channels, the user terminal acquires at least one of the common data channels. The user terminal can then receive a signal containing the common information over the acquired common data channels.

The common information includes a portion of the list of the plurality of common data channels which is applicable to the user terminal for a predetermined amount of time. Because the beam coverage (footprint) of the satellites change as the satellites orbit, the portion of the list changes over time. Using the applicable portion of the list, the user terminal can acquire one or more additional common data channels as their signals come into range of the user terminal. These additional common data channels can be transmitted on other beams of the same satellite or on beams of other satellites. Additionally, the user terminal can drop common data channels as their signals go out of range of the user terminal.

The user terminal can receive signals containing the common information from the additional common data channels. Additionally, these signals can be combined, using maximal ratio combining, to more accurately reproduce the common information.

The multiple common data channels acquired by the user terminal may be transmitted by the same satellite or different satellites. The user terminal includes deskew buffers to time align signals that are received from different satellites so that the signals can be combined.

### BRIEF DESCRIPTION OF THE FIGURES

The features, objects, and advantages of the present invention will become more apparent from the detailed description set forth below when taken in conjunction with the drawings in which like reference characters identify corresponding elements throughout and wherein:
FIG. 1A illustrates an exemplary wireless communication system in which the present invention is useful;
FIG. 1B illustrates exemplary communication links between a gateway and a user terminal;
FIG. 2 illustrates an exemplary transceiver for use in a user terminal;
FIG. 3 illustrates exemplary transceiver apparatus for use in a gateway;
FIG. 4 illustrates an exemplary satellite footprint;
FIG. 5 depicts geographic regions within a beam coverage area;
FIG. 6 is an exemplary list of common data channel identities for use in the present invention;
FIG. 7 is a flowchart depicting the operation of the present invention according to a preferred embodiment; and
FIG. 8 depicts a portion of the architecture of a user terminal receiver according to a preferred embodiment.

### DETAILED DESCRIPTION OF THE PREFERRED EMBODIMENTS

### I. Introduction

The present invention is particularly suited for use in communications systems employing low Earth orbit (LEO) satellites, wherein the satellites are not stationary with respect to a point on the surface of the Earth. The invention is also applicable to satellite systems in which the satellites travel in non-LEO orbits.

A preferred embodiment of the invention is discussed in detail below. While specific steps, configurations and arrangements are discussed, it should be understood that this is done for illustrative purposes only. A preferred application is in CDMA wireless spread spectrum communication systems.

### II. An Exemplary Satellite Communications System

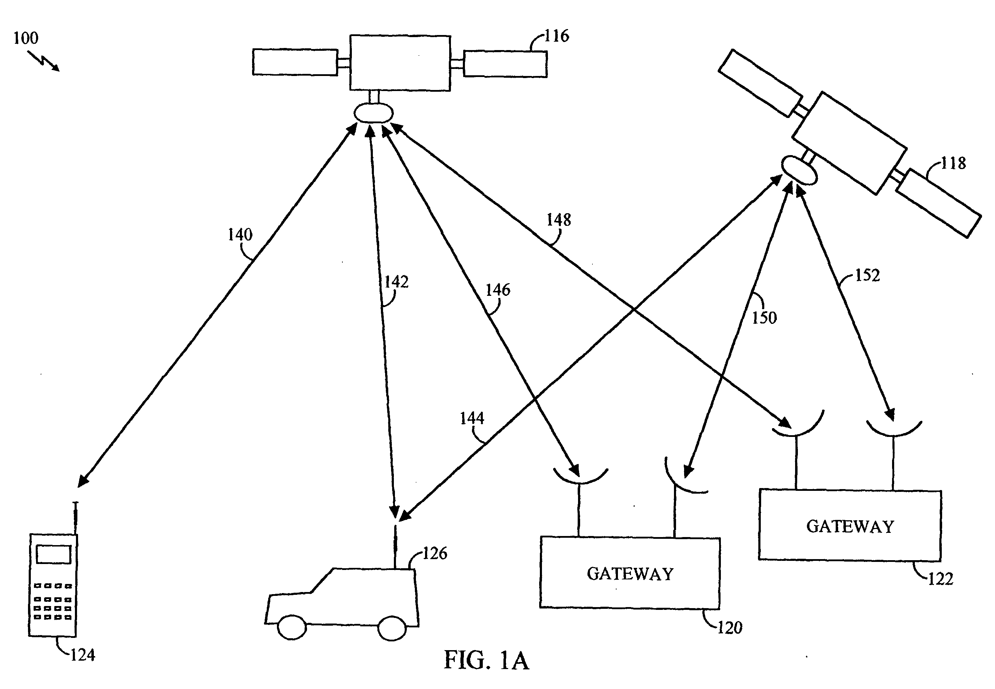

An exemplary wireless communication system in which the present invention is useful is illustrated in FIG. 1A. It is contemplated that this communication system uses CDMA type communication signals, but this is not required by the present invention. In a portion of a communication system 100 illustrated in FIG. 1A, two satellites 116 and 118, and two associated gateways or hubs 120 and 122 are shown for effecting communications with two remote user terminals 124 and 126. The total number of gateways and satellites in such systems depends on desired system capacity and other factors well understood in the art.

User terminals 124 and 126 each include a wireless communication device such as, but not limited to, a cellular telephone, a data transceiver, or a paging or position determination receiver, and can be hand-held or vehicle-mounted as desired. In FIG. 1A, the user terminals are illustrated as hand-held telephones. However, it is also understood that the teachings of the invention are applicable to fixed units where remote wireless service is desired. User terminals are sometimes also referred to as subscriber units, mobile stations, mobile units, or simply as "users" or "subscribers" in some communication systems, depending on preference.

Generally, beams from satellites 116 and 118 cover different geographical areas in predefined beam patterns. Beams at different frequencies, also referred to as FDMA channels or "sub-beams," can be directed to overlap the same region. It is also readily understood by those skilled in the art that beam coverage or service areas for multiple satellites might be designed to overlap completely or partially in a given region depending on the communication system design and the type of service being offered, and whether space diversity is being achieved.

A variety of multi-satellite communication systems have been proposed with an exemplary system employing on the order of 48 or more satellites, traveling in eight different orbital planes in LEO orbits for servicing a large number of user terminals. However, those skilled in the art will readily understand how the teachings of the present invention are applicable to a variety of satellite system and gateway configurations, including other orbital distances and constellations.

In FIG. 1A, some possible signal paths are illustrated for communications between user terminals 124 and 126 and gateways 120 and 122, through satellites 116 and 118. The satellite-user terminal communication links between satellites 116 and 118 and user terminals 124 and 126 are illustrated by lines 140, 142 and 144. The gateway-satellite communication links, between gateways 120 and 122 and satellites 116 and 118, are illustrated by lines 146, 148, 150 and 152. Gateways 120 and 122 may be used as part of one or two-way communication systems or simply to transfer messages or data to user terminals 124 and 126.

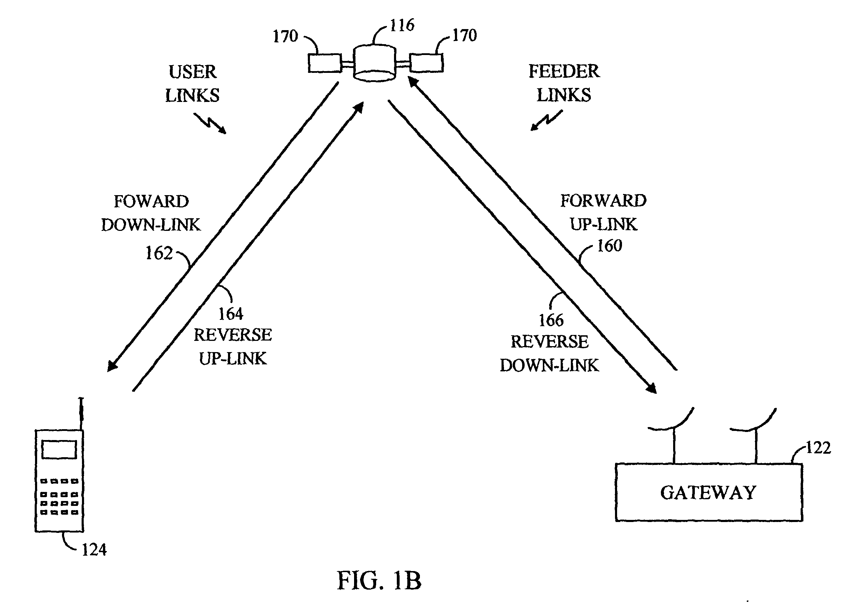

FIG. 1B provides additional details of the communications between gateway 122 and user terminal 124 of communication system 100. Communication links between user terminal 124 and satellite 116 are generally termed user links and the links between gateway 122 and satellite 116 are generally termed feeder links. Communications proceed in a "forward" direction from gateway 122 on forward feeder link 160 and then down from satellite 116 to user terminal 124 on forward user link 162. In a "return" or "reverse" direction, communication proceeds up from user terminal 124 to satellite 116 on reverse user link 164 and then down from satellite 116 to gateway 122 on reverse feeder link 166.

In an example embodiment, information is transmitted by gateway 122 on forward links 160, 162 utilizing frequency division and polarization multiplexing. The frequency band used is divided up into predetermined number of frequency "channels" or "beams." For example, the frequency band is divided into 8 individual 16.5 MHz "channels" or "beams" using right hand circular polarization (RHCP) and 8 individual 16.5 MHz "channels" or "beams" using left hand circular polarization (LHCP). These frequency "channels" or "beams" are further made up of a predetermined number of frequency division multiplexed (FDM) "sub-channels" or "sub-beams." For example, the individual 16.5 MHz channels may in turn be made up of up to 13 FDM "sub-channels" or "sub-beams", each of 1.23 MHz bandwidth. Each FDM sub-beam can include multiple orthogonal channels (also referred to as Walsh channels), which are established using Walsh codes. A majority of the orthogonal channels are traffic channels that provide messaging between user terminal 124 and gateway 122. The remaining orthogonal channels include pilot, sync, and paging channels.

The pilot channel is transmitted by gateway 122 on forward link 160, 162 and is used by user terminal 124 to acquire a sub-beam (CDMA carrier).

The sync channel is transmitted by gateway 122 on forward link 160, 162 and includes a repeating sequence of information which user terminal 124 can read after finding a pilot channel. This information is needed to synchronize user terminal 124 to the gateway 122 assigned to that subbeam. Paging channels are often used by gateway 122 on forward link 160, 162 to establish a communication link, to tell user terminal 124 that a call is coming in, to reply to a user terminal trying to access the system, and for registration of the user terminal.

The access channel is used by user terminal 124 on reverse link 164, 166 to "access" gateway 122. This could be to register on the system, to establish a communication link, to place a call, or to acknowledge a paging request by gateway 122.

The traffic channels are assigned on the forward and reverse links when a communication link is requested (for example, when a call is being placed). Messaging between user terminal 124 and gateway 122 during a conventional phone call is through a traffic channel.

In the reverse direction, user terminal 124 transmits information to satellite 116 over user link 164. Satellite 116 receives these signals from multiple user terminals (links 164) and frequency division multiplexes them together for the satellite-to-gateway feeder link 166.

### III. User Terminal Transceiver

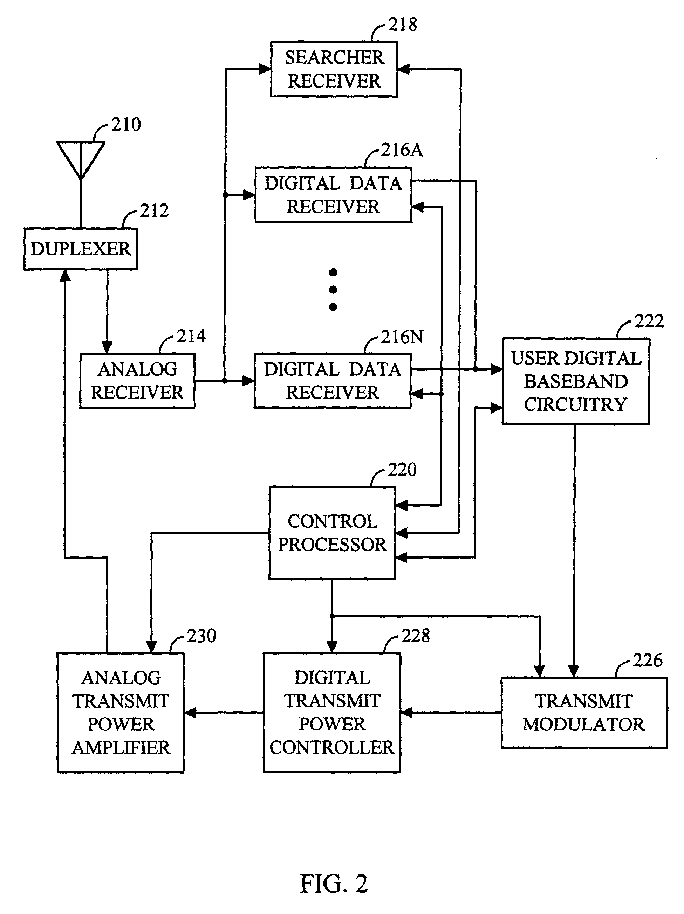

An exemplary transceiver 200 for use in user terminals 124 and 126 is illustrated in FIG. 2. Transceiver 200 uses at least one antenna 210 for receiving communication signals, which are transferred to an analog receiver 214, where they are down-converted, amplified, and digitized. A duplexer element 212 is often used to allow the same antenna to serve both transmit and receive functions. However, some systems employ separate antennas for operating at different transmit and receive frequencies.

The digital communication signals output by analog receiver 214 are transferred to at least one digital data receiver 216A and at least one searcher receiver 218. Additional digital data receivers 216B-216N can be used to obtain desired levels of signal diversity, depending on the acceptable level of transceiver complexity, as would be apparent to one skilled in the relevant art.

At least one user terminal control processor 220 is coupled to digital data receivers 216A-216N and searcher receiver 218. Control processor 220 provides, among other functions, basic signal processing, timing, power and handoff control or coordination, and selection of frequency used for signal carriers. Another basic control function often performed by control processor 220 is the selection or manipulation of pseudonoise (PN) code sequences or orthogonal functions to be used for processing communication signal waveforms. Signal processing by control processor 220 can include a determination of relative signal strength and computation of various related signal parameters. Such computations of signal parameters, such as timing and frequency, may include the use of additional or separate dedicated circuitry to provide increased efficiency or speed in measurements or improved allocation of control processing resources.

The outputs of digital data receivers 216A-216N are coupled to digital baseband circuitry 222 within the user terminal. User digital baseband circuitry 222 comprises processing and presentation elements used to transfer information to and from a user terminal user. That is, signal or data storage elements, such as transient or long term digital memory; input and output devices such as display screens, speakers, keypad terminals, and handsets; A/D elements, vocoders and other voice and analog signal processing elements; and the like, all form parts of the user digital baseband circuitry 222 using elements well known in the art. If diversity signal processing is employed, user digital baseband circuitry 222 can comprise a diversity combiner and decoder. Some of these elements may also operate under the control of, or in communication with, control processor 220.

When voice or other data is prepared as an output message or communications signal originating with the user terminal, user digital baseband circuitry 222 is used to receive, store, process, and otherwise prepare the desired data for transmission. User digital baseband circuitry 222 provides this data to a transmit modulator 226 operating under the control of control processor 220. The output of transmit modulator 226 is transferred to a power controller 228 which provides output power control to a transmit power amplifier 230 for final transmission of the output signal from antenna 210 to a gateway.

Transceiver 200 can also employ a precorrection element in the transmission path to adjust the frequency of the outgoing signal. This can be accomplished using well known techniques of up- or down-conversion of the transmission waveform. In the alternative, a precorrection element can form part of a frequency selection or control mechanism for the analog up-conversion and modulation stage (230) of the user terminal so that an appropriately adjusted frequency is used to convert the digital signal to a desired transmission frequency in one step.

Transceiver 200 can also employ a precorrection element in the transmission path to adjust the timing of the outgoing signal. This can be accomplished using well known techniques of adding or subtracting delay in the transmission waveform.

Digital receivers 216A-N and searcher receiver 218 are configured with signal correlation elements to demodulate and track specific signals. Searcher receiver 218 is used to search for pilot signals, or other relatively fixed pattern strong signals, while digital receivers 216A-N are used to demodulate other signals associated with detected pilot signals. Therefore, the outputs of these units can be monitored to determine the energy in, or frequency of, the pilot signal or other signals. These receivers also employ frequency tracking elements that can be monitored to provide current frequency and timing information to control processor 220 for signals being demodulated.

Control processor 220 uses such information to determine to what extent the received signals are offset from the oscillator frequency, when scaled to the same frequency band, as appropriate. This, and other information related to frequency errors and Doppler shifts, can be stored in a storage or memory element, as desired.

### IV. Gateway Transceiver

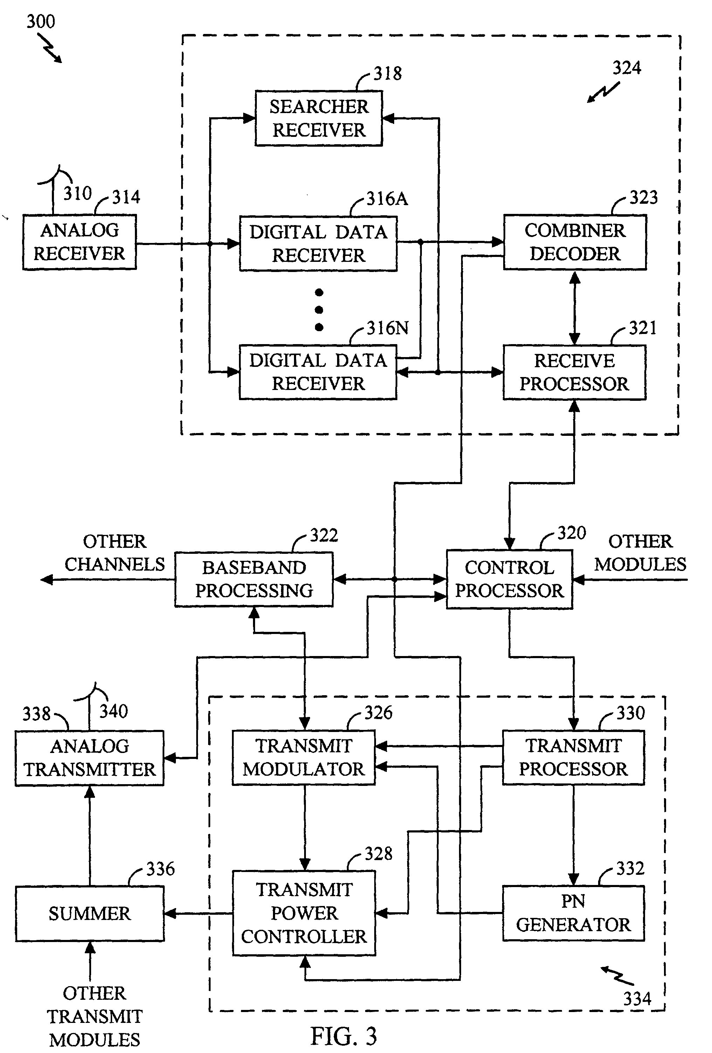

An exemplary transceiver apparatus 300 for use in gateways 120 and 122 is illustrated in FIG. 3. The portion of gateway 120, 122 illustrated in FIG. 3 has one or more analog receivers 314 connected to an antenna 310 for receiving communication signals which are then down-converted, amplified, and digitized using various schemes well known in the art. Multiple antennas 310 are used in some communication systems. Digitized signals output by analog receiver 314 are provided as inputs to at least one digital receiver module, indicated by dashed lines generally at 324.

Each digital receiver module 324 corresponds to signal processing elements used to manage communications between a gateway 120, 122 and one user terminal 124, 126, although certain variations are known in the art. One analog receiver 314 can provide inputs for many digital receiver modules 324, and a number of such modules are often used in gateways 120, 122 to accommodate all of the satellite beams and possible diversity mode signals being handled at any given time. Each digital receiver module 324 has one or more digital data receivers 316 and a searcher receiver 318. Searcher receiver 318 generally searches for appropriate diversity modes of signals other than pilot signals. Where implemented in the communication system, multiple digital data receivers 316A-316N are used for diversity signal reception.

The outputs of digital data receivers 316 are provided to subsequent baseband processing elements 322 comprising apparatus well known in the art and not illustrated in further detail here. Exemplary baseband apparatus includes diversity combiners and decoders to combine multipath signals into one output for each user. Exemplary baseband apparatus also includes interface circuits for providing output data to a digital switch or network. A variety of other known elements such as, but not limited to, vocoders, data modems, and digital data switching and storage components may form a part of baseband processing elements 322. These elements operate to control or direct the transfer of data signals to one or more transmit modules 334.

Signals to be transmitted to user terminals are each coupled to one or more appropriate transmit modules 334. A conventional gateway uses a number of such transmit modules 334 to provide service to many user terminals 124, 126 at a time, and for several satellites and beams at a time. The number of transmission modules 334 used by gateway 120, 122 is determined by factors well known in the art, including system complexity, number of satellites in view, user capacity, degree of diversity chosen, and the like.

Each transmit module 334 includes a transmit modulator 326 which spread-spectrum modulates data for transmission. Transmit modulator 326 has an output coupled to a digital transmit power controller 328, which controls the transmission power used for the outgoing digital signal. Digital transmit power controller 328 applies a minimum level of power for purposes of interference reduction and resource allocation, but applies appropriate levels of power when needed to compensate for attenuation in the transmission path and other path transfer characteristics. At least one PN generator 332 is used by transmit modulator 326 in spreading the signals. This code generation can also form a functional part of one or more control processors or storage elements used in gateway 122,124.

The output of transmit power controller 328 is transferred to a summer 336 where it is summed with the outputs from other transmit modules. Those outputs are signals for transmission to other user terminals 124, 126 at the same frequency and within the same beam as the output of transmit power controller 328. The output of summer 336 is provided to an analog transmitter 338 for digital-to-analog conversion, conversion to the appropriate RF carrier frequency, further amplification and output to one or more antennas 340 for radiating to user terminals 124, 126. Antennas 310 and 340 may be the same antennas depending on the complexity and configuration of the system.

At least one gateway control processor 320 is coupled to receiver modules 324, transmit modules 334, and baseband circuitry 322; these units may be physically separated from each other. Control processor 320 provides command and control signals to effect functions such as, but not limited to, signal processing, timing signal generation, power control, handoff control, diversity combining, and system interfacing. In addition, control processor 320 assigns PN spreading codes, orthogonal code sequences, and specific transmitters and receivers for use in user communications.

Control processor 320 also controls the generation and power of pilot, synchronization, and paging channel signals and their coupling to transmit power controller 328. The pilot channel is simply a signal that is not modulated by data, and may use a repetitive unchanging pattern or non-varying frame structure type (pattern) or tone-type input to transmit modulator 326. That is, the orthogonal function, Walsh code, used to form the channel for the pilot signal generally has a constant value, such as all 1's or 0's, or a well known repetitive pattern, such as a structured pattern of interspersed 1's and 0's. This effectively results in transmitting only the PN spreading codes applied from PN generator 332.

While control processor 320 can be coupled directly to the elements of a module, such as transmit module 324 or receive module 334, each module generally comprises a module-specific processor, such as transmit processor 330 or receive processor 321, which controls the elements of that module. Thus, in a preferred embodiment, control processor 320 is coupled to transmit processor 330 and receive processor 321, as shown in FIG. 3. In this manner, a single control processor 320 can control the operations of a large number of modules and resources more efficiently. Transmit processor 330 controls generation of, and signal power for, pilot, sync, paging signals, traffic channel signals, and any other channel signals and their respective coupling to power controller 328. Receiver processor 321 controls searching, PN spreading codes for demodulation and monitoring received power.

For certain operations, such as shared resource power control, gateways 120 and 122 receive information such as received signal strength, frequency measurements, or other received signal parameters from user terminals in communication signals. This information can be derived from the demodulated outputs of data receivers 316 by receive processors 321. Alternatively, this information can be detected as occurring at predefined locations in the signals being monitored by control processor 320, or receive processors 321, and transferred to control processor 320. Control processor 320 uses this information to control the timing and frequency of signals being transmitted and processed using transmit power controllers 328 and analog transmitter 338.

### V. Satellite Beam Patterns

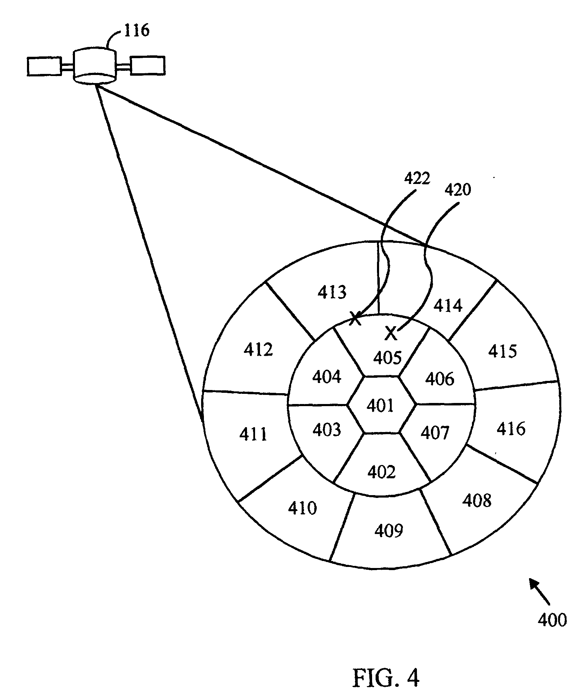

Generally, beams from satellites 116 and 118 cover different geographical areas in predefined beam patterns. Satellite beams are formed by, for example, a phased-array beam forming antenna, as would be apparent to one skilled in the relevant art. FIG. 4 illustrates an exemplary satellite beam pattern, also known as a footprint. As shown in FIG. 4, the exemplary satellite footprint 400 includes sixteen beams 401-416. More specifically, satellite footprint 400 includes an inner beam (beam 401), middle beams (beams 402-407), and outer beams (beams 408-416). Each beam 401-416 covers a specific geographical area, although there usually is some beam overlap. Additionally, beams at different frequencies, also referred to as FDMA channels or "sub-beams," can be directed to overlap the same region. Beam coverage or service areas for multiple satellites might be designed to overlap completely or partially in a given region depending on the communication system design and the type of service being offered, and whether space diversity is being achieved.

In a preferred embodiment of the present invention, different beam patterns are employed for the forward and reverse communications links. However, the beam patterns of the forward and reverse communications links can be the same without departing from the spirit and scope of the present invention.

Beam strength varies within an individual beam. More specifically, the beam strength is strongest at the center of the beam (also referred to as the "boresight" of the beam). In FIG. 4, user terminal 420 is located at the boresight of beam 405. The poorest reception location (where a beam strength is weakest) is usually at the "edge" of the beam. In FIG. 4, user terminal 422 is shown at the edge of beam 405.

An edge of one beam is often the edge of a second beam. For example, in addition to being at the edge of beam 405, user terminal 422 is also approximately at the edge of beam 413. By being at the edge of two beams, user terminal 422 is located at the equi-strength locus between the two beams. The equi-strength locus is usually designed to be at a predetermined point, such as the 3 dB point (also referred to as the half power point), of each of the two beams. That is, the signal power of each beam at the edge of each beam is approximately 3 dB less than the power at the center of each beam. This means that in a conventional satellite communications system, in order for a channel of either beam 405 or beam 413 to serve user terminal 422 (at the edge), the channel must operate at approximately 3dB higher than the power needed to serve a user terminal at the best location (at the boresight). In other words, the beam strength of beam 405 should be approximately 3dB higher than is necessary to serve user terminal 420, in order to also serve user terminal 422.

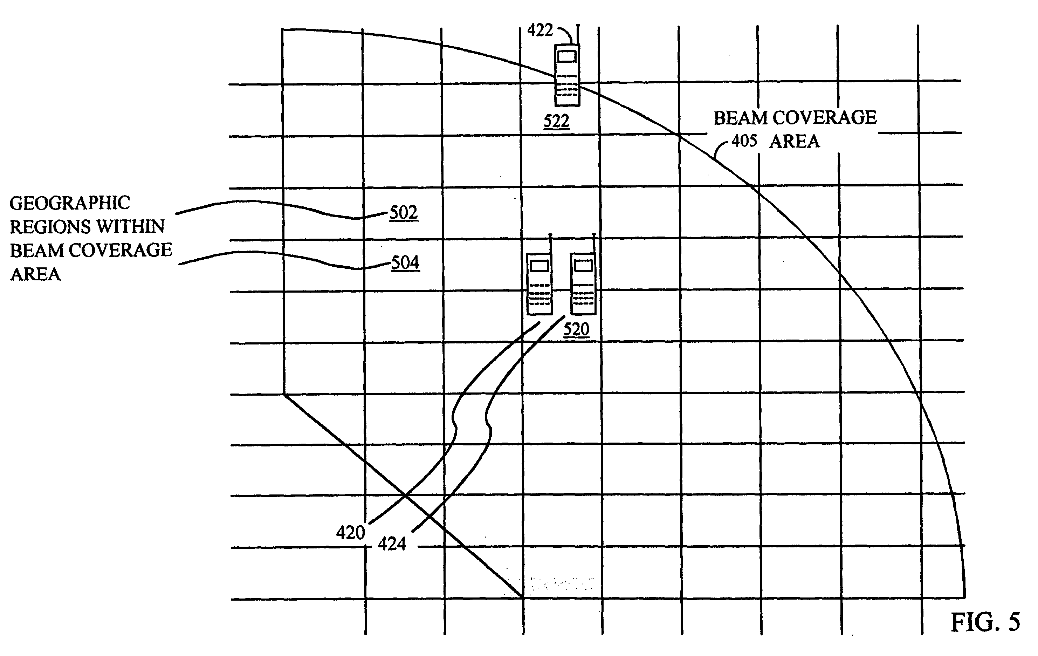

FIG. 5 illustrates the coverage area of beam 405 in more detail. Beam 405 is shown divided by grids into geographic regions. For the purpose of discussion, assume that each of these geographic regions (for example, regions 502, 504 and 520) is approximately 100 miles across, and thus the entire beam coverage 405 is approximately 1000 miles across. As discussed above, user terminals located within the same beam coverage area may need information that is specific to the geographic region in which they are located. For example, user terminals 420 and 424 may need information specific to geographic region 520. In contrast, user terminal 422 may need information specific to geographic region 522.

### VI. Preferred Embodiment of the Invention

A preferred embodiment of the invention is discussed in detail below. While specific steps, configurations and arrangements are discussed, it should be understood that this is done for illustrative purposes only. A person skilled in the relevant art will recognize that other steps, configurations and arrangements can be used without departing from the spirit and scope of the present invention. The present invention could find use in a variety of wireless information and communication systems, including those intended for position determination.

As discussed above, there is a need for a system and method for transmitting common information to a plurality of authorized users within a relatively small geographic region. To reduce channel interference, increase capacity, and conserve power, the system and method should be designed to use a minimal amount of power for the channels used to transmit the common information.

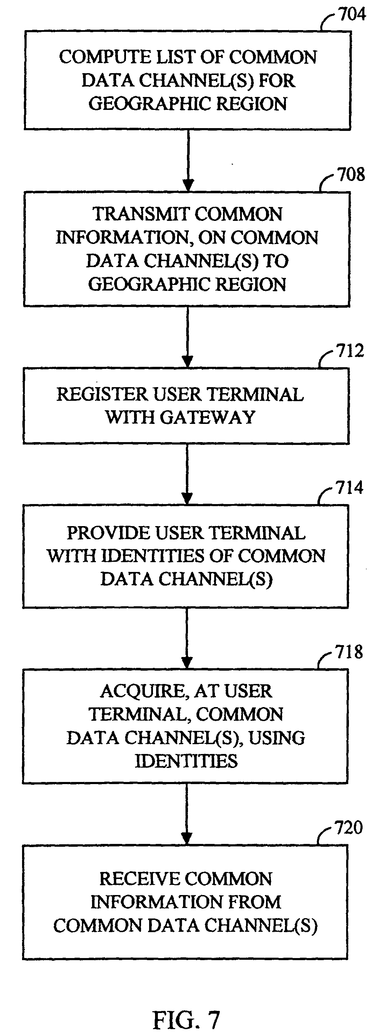

FIG. 7 is a flowchart depicting the operation of the present invention in a preferred embodiment.

### 1. Generate List of Common Data Channels for Geographic Region

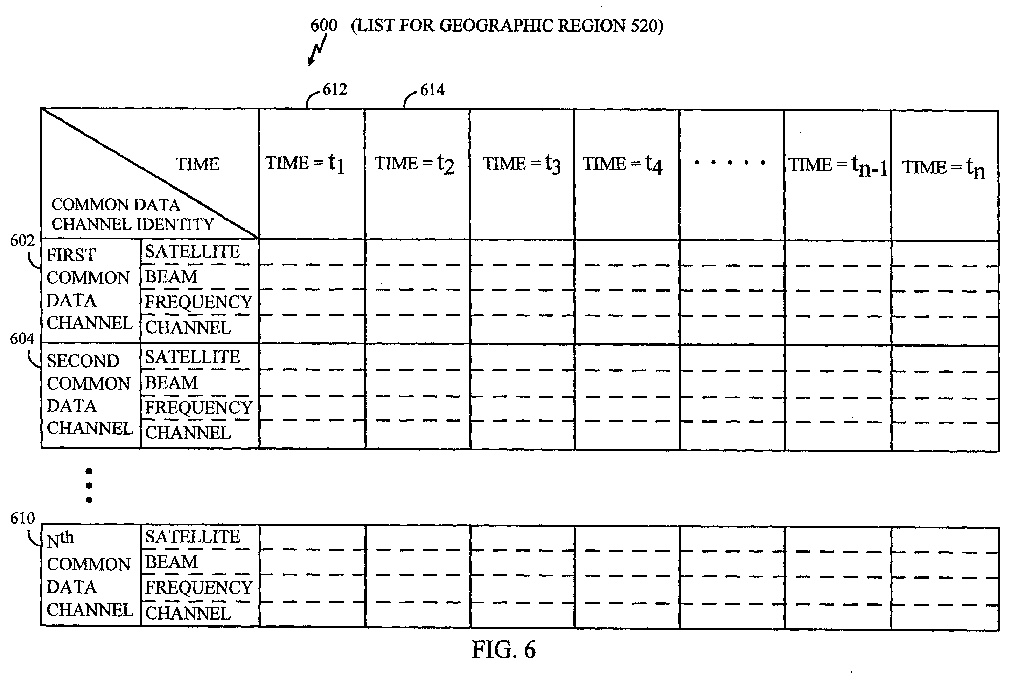

The first step, 704, in transmitting common information to a plurality of authorized users within a relatively small geographic area is to determine which beams a gateway will use to cover the geographic region and which channels the gateway will use to transmit the common information. That is, if the boundaries of the geographic regions to which common information is to be transmitted are known in advance, the exact identities of the channels that will be used to transmit the common information can be determined in advance. These channels, used to transmit common information, shall be referred to hereafter as "common data channels". The identities of the common data channels can be formatted into a list. List 600 of FIG. 6 is an example of such a list, here used to list common data channels specific to geographic region 520.

In one embodiment, as shown in list 600, the identity of a common data channel includes which satellite, beam, frequency, and channel will be used to transmit the common information to a specific geographic region during a specific time. If multiple common data channels are used to transmit common information to a specific geographic region, then list 600 includes the identities of the multiple common data channels. For example, at a time t₁, first common data channel 602, second common data channel 604, and Nth common data channel 610, all transmit common data information to geographic region 520. The information necessary to identify a common data channel depends on what type of satellite access scheme is used. For example, if CDMA is used, then the identity of the orthogonal channel, here a Walsh (code) channel used to transmit the common information, is necessary. If time division multiple access (TDMA) is used, then the time slot of the common data channel must be identified. If frequency division multiple access (FDMA) is used, then the frequency of the common data channel must be identified.

In a preferred embodiment, the present invention is for use in a satellite-based communication system where the satellites are not stationary with respect to a point on the surface of the Earth. It is noted that if the satellites used to transmit the common data channels were geosynchronous, meaning synchronous with the Earth's rotation, list 600 could have unvarying values or contents because the satellites could indefinitely cover the same geographic regions. However, in a satellite-based communications system where the satellites are not stationary with respect to a point on the surface of the Earth, the geographic area covered by a given satellite and a given beam is constantly changing. As a result, a user terminal that was at one time positioned within a particular beam of a particular satellite is at a later time positioned within a different beam of the same satellite and/or within a different beam of a different satellite. More specifically, a satellite beam covering a geographic region at a time t₁ (612), may not cover that same geographic region at a time t₂ (614) (for example, t₁ + 2 minutes). Thus, in a preferred embodiment list 600 is dynamic and changes over time.

As discussed above, the common information, which is transmitted on common data channels 602, 604 and 610 of list 600, is specific to geographic region 520. Another list may exist for a geographic region 504, wherein that list is specific to geographic region 504. Similarly, lists may exist for geographic regions 502, 522, and the like.

It is important to note that user terminals 420 and 424, because they are located within the same geographic region 520, need the same common information. In contrast, user terminal 422, located in geographic region 522, needs different common information. Thus, what is meant by "common information" is that the information is common or specific to a particular geographic region or group, of user terminals which are located in one or more adjacent beams.

List 600 may be generated at the gateway, or at a central point and fed to the gateway. List 600 may include the identities of the common data channels expected to be used for any amount of time extending into the future, for example, two minutes, two hours, two days, and the like, limited only by the slow drift and corrections of the satellites from their nominal orbit.

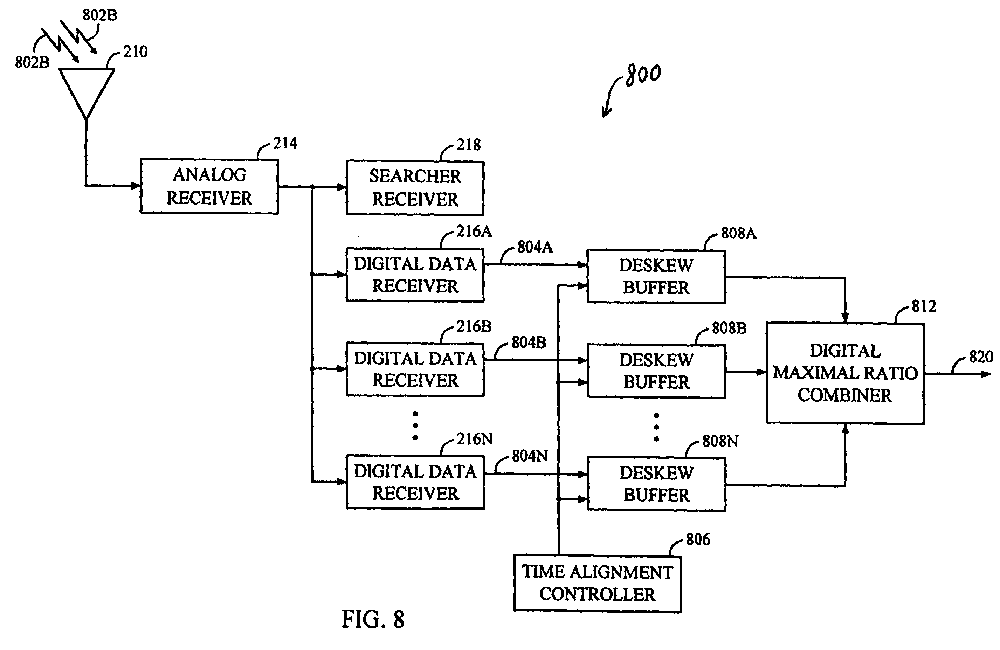

The number of satellites and the number of common data channels used to transmit common information that is relevant to a specific geographic region can vary depending on the design of the system. The additional common data channels are usually just channels in other beams, that is, one common data channel per beam that overlaps the desired target area on the ground. For example, when three satellites each have beams covering a specific geographic region, if maximum diversity and redundancy are desired, then all three satellites should transmit the common information relevant to the specific geographic region. Transmitting the common information over more than one common data channel enables a user terminal to combine the signal to noise ratio of multiple signals (as discussed below in the description of FIG. 8) to thereby increase the accuracy of the received common information. In situations where diversity and redundancy are not important, only one satellite might be used to transmit the common information. Additionally, each satellite can transmit the common information over more than one common data channel, although this is generally less useful.

### 2. Transmit Common Information to Geographic Region

As indicated in step 708, once the beams used to cover a geographic region are selected, common information can be sent, on common data channels, to the geographic region. Common information specific to a geographic region, such as region 520, may be continuously transmitted on common data channels. Using list 600, the gateway knows which satellites, beams, frequencies, and channels on which to transmit the common information at specific times. In another embodiment, which conserves power, the gateway does not transmit common information specific to a geographic area on common data channels until at least one user within the geographic region registers with the gateway..

A user terminal should know which common data channels are specific to the geographic region so that the user terminal can acquire those channels, and thereby receive common information over those channels. In one embodiment, any user terminal located within beam coverage area 405 is capable of, if provided with the necessary information, receiving common data channels that are specific to any of the geographic regions (for example, 502, 504, 520 and 522) located within beam coverage area 405. A preferred embodiment provides a user terminal, located within a specific geographic region (for example, 520) of a beam coverage area (for example, 405), only with common information that is specific to the user terminal's geographic region (for example, 520).

As explained below, before a gateway provides a user terminal with the identities of the common data channel(s), the user terminal may need to be authenticated. Additionally, the user terminal may need a proper decryption key to read the identities of the common data channel(s) and/or the common information.

### 3. Register User Terminal with Gateway

In step 712, a user terminal registers with the gateway. Registration serves at least two purposes. A first purpose is to provide the gateway with the user terminal's location so that the gateway knows which common information the user terminal should receive and, thus, which common data channel identities should be provided to the user terminal. A second purpose is to authenticate the user terminal for access to the communication system.

There are at least two methods for the gateway to determine a location of a user terminal. In one embodiment, the user terminal includes a Global Positioning Satellite (GPS) receiver, which is well known in the art. Using the GPS receiver, the user terminal can determine and forward its location to the gateway. The user terminal's location can be forwarded from the user terminal to the gateway as an access probe on an access channel, embedded within other signals, or as a separate signal. In another embodiment, the gateway can determine the user terminal's location based on information sent from the user terminal to the gateway. Examples of systems and methods that can be used to determine a user terminal's location are disclosed in U.S.-A-5,126,748, issued June 30, 1992, entitled *"Dual Satellite Navigation System And Method,"* U.S. Patent No.6,327,534 filed June 23, 1998, entitled "*Unambiguous Position Determination Using Two Low-Earth Orbit Satellites,"* U.S. Patent No.6,078,284, filed September 30, 1996, entitled "*Passive Position Determination Using Two Low-Earth Orbit Satellites,"* and U.S. Patent No. 6,107,959 filed September 30, 1996, entitled *"Position determination Using One Low-Earth Orbit Satellite,"* each of which is assigned to the assignee of the present invention. These patents and applications discuss determining the location of a user terminal using information such as characteristics of communications signals transmitted to and from the user terminal and known positions and velocities of satellites.

In a preferred embodiment, when a user turns on a user terminal, a registration request that includes the user terminal's identification, and possibly location, is sent from the user terminal to the gateway. In one embodiment, the registration request is an access probe that is sent from the user terminal to the gateway over an access channel. Access channels, which are well-known in the relevant art, provide communications from a user terminal to a gateway when the user terminal is not using a traffic channel. One or more access channels are generally paired with a paging channel. In CDMA systems, each access channel on a reverse link is distinguished by a different long PN code. Conventional messages sent over the access channels provide for call originations, responses to pages, and registrations. The gateway responds to transmission on a particular access channel by a message on the access channel's associated paging channel. Similarly, the user terminal responds to a paging channel message by transmitting on one of the associated access channels.

Based on the user terminal's location and identification, the gateway checks a list database, or other look-up mechanism, to see which common information the user terminal is requesting. That is, the gateway determines which common information is requested based on the geographic region that the user terminal is located within or other known basis (for example, on a basis of group membership). Additionally, the gateway may determine, based on at least the user terminal's identification, whether the user terminal is allowed access to the common information.

In one embodiment, a user terminal must be authenticated prior to the gateway sending the user terminal the identities of common data channel(s). The authentication may simply be based on the user terminal's identification. This embodiment is preferred when the identity of a user of the user terminal is relatively unimportant.

In another embodiment, the gateway sends a challenge(s) to the user terminal and compares the user's/user terminal's response(s) with an expected authentication signature to verify the user's/user terminal's authenticity. A basic authentication challenge includes a method for proving one's identity. In particular, it can include simple passwords, shared secrets (for example, mother's maiden name), cryptographic authentication protocols, biometric tests (for example, retinal scans), or any other authentication technique. Additionally, authentication can be performed in the same manner that it is performed in conventional cellular mobile communication systems that prevent cloning. The sophistication of the authentication process should be directly related to the level of risk associated with an unauthorized user gaining access to the system. Depending on the authentication process, the user terminal must be sophisticated enough to accept input of responses to challenges and forward the responses to the gateway. For example, if the challenge requires a retinal scan, the user terminal must include a retinal scanning device. If the challenge requires a password, the user terminal must include a keypad.

Additionally, the common information can be encrypted, so that unauthorized user terminals that manage to acquire the common data channels cannot decrypt the common information. That is, if the common information is encrypted, only user terminals having the proper decryption key can decrypt the common information. Various encryption and decryption techniques that are well known in the art can be used.

As stated above, in order to conserve power, a gateway may wait until at least one user within a geographic region registers with the gateway before the gateway transmits common information to the geographic area on common data channels. To further conserve power, a user terminal may be required to de-register or sign-off with the gateway when the user terminal no longer requires common information. By having user terminals de-register, the gateway can keep track of how many users are within a specific geographic region, and can thereby inactivate or suspend use of common data channels when no registered users are located within the specific geographic region. Alternatively, the gateway can allocate these channels to some other use when no registered users are located within the specific geographic region.

Additionally, since a gateway may determine the location of user terminals when user terminals register, the gateway may adjust the strength of common data channels depending on the locations of user terminals. Also, if all the user terminals within a geographic region are all in a smaller, well-defined sub-region such as the same comer of the geographic region, the number of common data channels transmitting the common information may be accordingly reduced. Additional methods of conserving power are discussed below.

### 4. Provide User Terminal with Identities of Common Data Channel(s)

In order to receive common information specific to a geographic region of a user terminal, the user terminal must be provided with the relevant identities of common data channel(s) that transmit the common information. Thus, the identities of the common data channels are provided to the user terminal in step 714. In a preferred embodiment, this information (the identities of common data channel(s)) is sent from the gateway to the user terminal in response to the user terminal's registration request. Of course, the gateway can limit sending this information to those user terminals which have been authenticated. Additionally, this information can be encrypted so that only those user terminals having a proper decryption key can decipher the identities of the common data channels.

As discussed above, list 600 includes the identities of the common data channels which are relevant to geographic region 520, and, thus, relevant to user terminals 420 and 424. Once user terminal 420 is properly authenticated, the gateway sends user terminal 420 the identities of at least one of the common data channels, in list 600, in response to the user terminal's registration request. In one embodiment, the gateway simply sends user terminal 420 a portion of list 600. That is, if user terminal 420 registers at time t₁ (612), the gateway may send a portion of list 600 that includes the identities of the common data channels relevant to geographic location 520 at only time t₁ (612). Alternatively, the portion of list 600 may include the identities of the common data channels at times t₁ (612), t₂ (614), and the like.

In one embodiment, the gateway sends the identities of the common data channel(s) to user terminal 420 over a paging channel, wherein the paging channel is associated with the access channel on which user terminal 420 originally sent the registration request access probe. As discussed above, user terminal 420 includes signal or data storage elements, such as transient or long term digital memory. When user terminal 420 receives the identities of at least one common data channel, the user terminal saves the identities in a storage element.

In step 718, user terminal 420 acquires at least one common data channel using the received identities of the common data channel(s) and other known information. More specifically, using the identities of the common data channel(s), searcher receiver 218, in user terminal 420, searches for and acquires at least one common data channel.

In step 720, once user terminal 420 has acquired at least one common data channel, it can begin to receive the common information. As discussed above, if the common information is encrypted, user terminal 420 must also use the proper decryption key to read the common information.

As discussed above, because the satellites used in the preferred embodiment are not stationary with respect to a geographic region on the surface of the Earth, the identities of the common data channels that transmit the common information to the specific geographic region change over time. Thus, a user terminal must be updated as to the changing identities of the common data channels. Otherwise, once the beams transmitting the common data channels (that the user terminal acquires at time t,) no longer cover the geographic region within which the user terminal is located (for example, at time t₃), the user terminal will be unable to receive the common information.

In a preferred embodiment, data representing a portion of list 600 is transmitted from the gateway to user terminal 420 from time to time (not necessarily periodically). How often the gateway should send a portion of list 600 depends on at least two factors. The first factor is the relative movement of the satellites and the Earth. In other words, how rapidly acquired common data channels go out of range of user terminal 420 affects how often a portion of list 600 should be sent to user terminal 420. The second factor is how far into the future each portion of list 600 is relevant. In other words, the portion of list 600 sent to user terminal 420 can include the identities of all common data channels that can be acquired within the next two hours, or only within the next ten minutes. If the portion of list 600 is relevant for only 10 minutes, then it needs to be sent to user terminal 420 more often than if list 600 were relevant for 2 hours. Additionally, because the gateway knows the approximate position of user terminal 420, the gateway can wait to send user terminal 420 a portion of list 600 until a common data channel that user terminal 420 is acquiring is about to go out of range of user terminal 420.

However, while in principle one can delay sending list update information until the time that the first user in an area sees a current beam go out of range, and has no more left on the list, in practice it is unlikely a system would use this approach. A system is not likely to want to wait that long and risk losing signal acquisition due to a lack of beam assignments. List updates should be broadcast sufficiently often by or within a system so that every user has at least one or two more beams left on the list beyond what is currently being used to guard against missed acquisitions.

It is noted that if the satellites used to transmit the common data channels were geosynchronous and list 600 had unvarying values or contents because the satellites could indefinitely cover the same geographic regions, then list 600 would only have to be sent once to user terminal 420.

In one embodiment, a portion of list 600 can be multiplexed on the common data channel along with common information. Stated in another way, the common information can include a portion of list 600 and "party line" data. The party line data is the information that is specific to the geographic region of a user terminal. The party line data can be information that frequently changes and, thus, needs to be constantly updated. Examples of party line data include ionospheric delay information and troop movement instructions, as discussed above. Additional examples of party line data include highway traffic conditions, weather conditions, local market information, and the like. In a preferred embodiment, the portion of list 600 that is sent to user terminal 420 includes the identity of all the common data channels that will be transmitted, for the next N minutes (for example, 5 minutes), to geographic region 520 within which user terminal 420 is located.

Because user terminal 420 is provided, from time to time, with the identities of the relevant common data channel(s) for the next N minutes, user terminal 420 can, when necessary, search for new common data channels to replace the common data channel(s) that are transmitted on beams which are moving out of the user terminal's range (that is, no longer cover the geographic region of the user terminal). For example, once the beam creating beam coverage area 405 no longer covers geographic area 520, user terminal 420 can acquire, using the identities in the portion of list 600, other common data channels transmitted on other beams, to thereby continue to receive the common information. The other beams may be transmitted from the same satellite such as beams 401, 404, 413, 414, and the like. Additionally, the other beams may be transmitted from a different satellite.

In one embodiment, once the user terminal receives the identity of at least one common data channel from the gateway there is no further communication required from the user terminal to the gateway. Thus, in this embodiment the operation is "open-loop" from that point on in the sense that there is no feedback (for example, power control information) from the user terminal to the gateway, only transmission from the gateway to the user terminal.

### 5. Receiver Portion of User Terminal

FIG. 8 depicts a receiver portion of the architecture of user terminal transceiver 800 according to a preferred embodiment. Receiver 800 includes antenna 210, analog receiver 214, searcher receiver 218, and digital data receivers 216A-216N. Receiver 800 also includes deskew buffers 808A-808N, time alignment controller 806, and digital maximal ratio combiner 812. Receiver 800 receives the identities of common data channel(s) in step 718 and the common information in step 720.

Receiver 800 includes digital maximal ratio combiner 812 for combining digital signals produced by each digital data receiver 216A-216N to produce combined output signal 820. Output signal 820 is a digital data signal, which can be fed to decoders and the like for further processing, as would be apparent to one skilled in the relevant art.

Analog receiver 214 includes a down-converter to reduce the frequency of received signals to baseband. Analog receiver 214 also includes an analog-to-digital converter to convert analog baseband signals to digital signals. Digital data receivers 216A-216N despread and demodulate digital signals, provide error correction and the like. The outputs 804A-804N of digital receivers 216A-216N are digital data signals.

Referring to the FIGS. 4, 5, and 8, user terminal 422 receives signal 802A transmitted by satellite 116 on a common data channel of a first beam (413) and signal 802B transmitted by the same satellite 116 but on a different common data channel of a second beam (405). Signals 802A and 802B both contain the same common information but are transmitted over separate common data channels. That is, the common information transmitted over the separate common data channels are identical and are both specific to geographic region 522. Because signals 802A and 802B are transmitted from the same satellite, their timing is substantially aligned. This is because all beams coming from the same satellite have their timing substantially aligned at all points within the satellite's footprint. Thus, demodulated signals 804A and 804B input to digital maximal ratio combiner 812 are substantially time-aligned. Digital maximal ratio combiner 812 combines the demodulated signals to produce an effective signal 820 having an effective signal strength greater than signals 804A or 804B individually. In a preferred embodiment, digital maximal ratio combiner 812 weights each digital signal 804A and 804B based on its signal to noise ratio (SNR) prior to combining so as to maximize the SNR of output signal 820.

In a preferred embodiment, receiver 800 includes deskew buffers 808A-808N and time alignment controller 806. Examples of deskew buffers and a time alignment controller are disclosed in U.S. Patent No.6, 181, 912 entitled *"System and Method for User Terminal Clock Error Measurement and Correction,"* which is assigned to the assignee of the present invention. The deskew buffers 802A, 802B are necessary if signals 802A and 802B are transmitted from a first and a second satellite, respectively, wherein the distance between the user terminal and the first satellite is different than the distance between the user terminal and the second satellite. This is because the time for signal 802A to reach the user terminal will be different than the time for signal 802B to reach the user terminal. Deskew buffers 808A, 808B, and time alignment controller 806 impose time alignment upon signals 802A, 802B, that are respectively transmitted by the first and second satellites, so that when the two signals leave their respective deskew buffers, they are in time alignment and capable of being combined by digital maximal ratio combiner 812. An example of a digital maximal ratio combiner is disclosed in U.S. Patent Application Serial No. 08/939,325, filed September 29, 1997, entitled *"Using Multiple Antennas to Mitigate Specular Reflection,"* which is assigned to the assignee of the present invention.

Referring to FIG. 4, user terminal 422 is close to the "edge" of beams 413 and 405. As discussed above, being close to the "edge" of beams 413 and 405 means that user terminal 422 is at approximately the equi-strength locus between beams 413 and 405, which is usually designed to be a predetermined value, such as 3 dB, down from the boresight of beams 413 and 405. In other words, the signal power at the edge of beams 413 and 405 is approximately 3 dB less than the power at the center of beams 413 and 405. A reduction of 3dB results in about half the power. Thus, if user terminal 422 were to receive a signal over only beam 413 or only beam 405, performance may be inadequate. However, by combining the powers of signals 802A and 802B, digital maximal ratio combiner 812 creates a digital data signal 820 having an effective strength approximately equal to the strength of a single signal received near the boresight of either of beams 413 and 405. Therefore, to serve user terminal 422 when it is located close to the edge of two beams, the power of each common data channel can be less than the power necessary to serve a user terminal (which does not combine signal powers) located near the boresight of a beam. Thus, the common data channels can have a power less than that of conventional paging channels which often operate at about 3 dB higher than the power needed to serve the best location in order to serve a user terminal at the worst location, for example, the edge of a beam.

In a preferred embodiment, using the portion of list 600 received from the gateway, receiver 800 acquires as many common data channels as possible. This is limited by the number of available common data channels specific to the geographic region of a user terminal and the number of digital data receivers 216A-N within receiver 800 of the user terminal. These common data channels can be transmitted over different beams of the same satellite or over beams of different satellites. As discussed above, the signal to noise ratio of the common data channel signals are combined to increase the accuracy of the common information. In a preferred embodiment, receiver 800 selects, whenever possible (depending on the information in list 600), common data channels that are transmitted from different satellites in order to increase diversity. One benefit of this is that it reduces the probability that the user terminal will be blocked by an obstruction and, thus, unable to receive the common information.

In one embodiment, analog receiver 214 includes more than one down-converter to thereby enable user terminal receiver 800 to simultaneously down-convert multiple signals received from common data channels that are transmitted on different frequencies. As discussed above, list 600 identifies the frequencies of the common data channel(s). Thus, list 600 is useful in a system where the common data channels relevant to a specific geographic region are transmitted on more than one frequency.

### 6. Wilting

In one embodiment a process of "wilting" is used. Wilting is described in U.S.-A-5,584,049, issued December 10, 1996, and entitled *"Apparatus and Method For Adding And Removing A Base Station From A Cellular Communications System,"* and U.S.-A-5,475,870, issued December 12, 1995, and entitled *"Apparatus and Method For Adding And Removing A Base Station From A Cellular Communications System,"* which are both assigned to the assignee of the present invention. According to the wilting process, the power of one or more common data channels is very slowly reduced over time by the gateway. Using information, such as that included in list 600, a user terminal knows which common data channels it should be able to acquire at a specific point in time. When the gateway lowers the power of common data channels to the point where a user terminal can no longer accurately reproduce the common information, the user terminal sends a message to the gateway telling it to increase channel power. In response to the message, the gateway increases the power of common data channel(s) by a preselected amount, for example 1dB. The gateway can then again begin to slowly reduce or "wilt" the power of common data channel(s) until the gateway receives another message indicating that the power is too low.

The message from the user terminal may simply notify the gateway that it can no longer accurately reproduce the common information. Additionally, the message can include the identity and/or the location of the user terminal. Using the location information, the gateway can determine which common data channels should have their power increased. Alternatively, the message from a user terminal may notify a gateway that the user terminal is supposed to be receiving common information over a specific channel, frequency, beam, and satellite, thereby enabling the gateway to limit the increasing of power to specific common data channels or allow increasing power to those specific channels quickly without requiring processing to determine what channels should be adjusted.

The previous description of the preferred embodiments is provided to enable any person skilled in the art to make or use the present invention. While the invention has been particularly shown and described with reference to preferred embodiments thereof, it will be understood by those skilled in the art that various changes in form and details may be made therein without departing from the scope of the invention as defined by the appended claims.

## Claims

1. A method for providing common information to a plurality of user terminals (124, 126, 420, 422, 424) within a predefined geographic region (502, 504, 520, 522), in a satellite communications system having a gateway (120, 122), and a plurality of satellites (116, 118) that orbit such that they are not stationary with respect to a point on the surface of the Earth, each of said plurality of satellites (116, 118) having beams (401-416) covering different geographical areas in predefined beam patterns, **characterised in that**:
said predefined geographic region (502, 504, 520, 522) is smaller than the geographical area covered by a beam (401-416) and said common information is related to said predefined geographic region (502, 504, 520, 522);
and **in that** the method comprises the steps of:
generating a list (600) identifying a plurality of common data channels (602, 604, 610) over which the common information will be transmitted from the gateway (120, 122) to said predefined geographic region (502, 504, 520, 522), wherein said list (600) changes over time due to the orbiting of the satellites (116, 118) and is specific to said predefined geographic region (502, 504, 520, 522);
transmitting the common information on said plurality of common data channels (602, 604, 610); and
receiving, at a user terminal (124, 126, 420, 422, 424), the common information over at least one of said plurality of common data channels (602, 604, 610).

2. The method of claim 1, wherein said list (600) includes, for each of said plurality of common data channels (602, 604, 610), information identifying a predetermined satellite (116, 118), beam (401-416), frequency, and channel.

3. The method of claim 1, further comprising the step of registering said user terminal (124, 126, 420, 422, 424) with the gateway (120, 122).

4. The method of claim 3, wherein said registering step further comprises the step of transmitting, from said user terminal (124, 126, 420, 422, 424) to the gateway (120, 122), an access probe, on an access channel, to thereby register said user terminal (124, 126, 420, 422, 424) with the gateway (120, 122) and to provide the gateway (120, 122) with said user terminal's location.

5. The method of claim 3, further comprising the step of transmitting, from the gateway (120, 122) to said user terminal (124, 126, 420, 422, 424), identities of one or more common data channels (602, 604, 610) of said plurality of common data channels (602, 604,610).

6. The method of claim 5, wherein said identities of one or more common data channels (602, 604, 610) are transmitted on a paging channel.

7. The method of claim 5, further comprising the step of acquiring, at the user terminal (124, 126, 420, 422, 424), at least one of said plurality of common data channels (602, 604, 610) using said identities of one or more common data channels (602, 604, 610).

8. The method of claim 7, further comprising the step of multiplexing, at the gateway (120, 122), a portion of said list (600) with party line data to thereby produce the common information, wherein said portion of said list (600) is applicable to said user terminal (124, 126, 420, 422, 424) for a predetermined amount of time and changes over time due to the orbiting of the satellites (116, 118).

9. The method of claim 7, wherein the common information includes a portion of said list (600) which is applicable to said user terminal (124, 126, 420, 422, 424) for a predetermined amount of time and changes over time due to the orbiting of the satellites (116, 118).

10. The method of claim 9, further comprising the step of acquiring one or more additional common data channels (602, 604, 610) of said plurality of common data channels (602, 604, 610) at said user terminal (124, 126, 420, 422, 424) by using said portion of said list (600), as signals of said additional common data channels (602, 604, 610) come into range of said user terminal (124, 126, 420, 422, 424).

11. The method of claim 10, further comprising the steps of dropping common data channels (602, 604, 610) as their signals go out of range of said user terminal (124, 126, 420, 422, 424).

12. The method of claim 10, further comprising the step of receiving, at said user terminal (124, 126, 420, 422, 424), the common information from said one or more additional common data channels (602, 604, 610).

13. The method of claim 10, further comprising the step of combining signals received over said acquired common data channels (602, 604, 610) to thereby more accurately reproduce the common information.

14. The method of claim 13, wherein said step of combining includes maximal ratio combining.

15. The method of claim 13, wherein a first common data channel of said acquired common data channels (602, 604, 610) is transmitted on a beam (401-416) of a satellite (116, 118) and a second common data channel of said acquired common data channels (602, 604, 610) is transmitted on a different beam (401-416) of said satellite (116, 118).

16. The method of claim 13, wherein a first common data channel of said acquired common data channels (602, 604, 610) is transmitted on a beam (401-416) of a satellite (116, 118) and a second common data channel of said acquired common data channels (602, 604, 610) is transmitted on a different beam (401-416) of a different satellite (116, 118), and further comprising the step of time aligning, at said user terminal (124, 126, 420, 422, 424), signals received on said first common data channel with signals received on said second common data channel, prior to said combining step.

17. The method of claim 13, wherein a beam strength of one of said acquired common data channels (602, 604, 610) is insufficient to accurately reproduce the common data information.

18. The method of claim 10, wherein a first common data channel is transmitted on a beam (401-416) of a satellite (116, 118) and wherein said step of acquiring additional common data channels (602, 604, 610) includes selecting at least one of said additional common data channels (602, 604, 610) from a beam (401-416) of a different satellite to thereby provide diversity.

19. The method of claim 1, further comprising the step of reducing the power of at least one of said plurality of common data channels (602, 604, 610) over time.

20. The method of claim 19, further comprising the step of increasing the power of said at least one of the plurality of common data channels (602, 604, 610) when the gateway (120, 122) receives an indication that the power is too low.

21. An apparatus for providing common information to a plurality of user terminals (124, 126, 420, 422, 424) within a predefined geographic region (502, 504, 520, 522), in a satellite communications system having a gateway (120,122), and a plurality of satellites (126, 118) that orbit such that they are not stationary with respect to a point on the surface of the Earth, each of said plurality of satellites (116, 118) having beams (401-416) covering different geographical areas in predefined beam patterns, **characterised in that**:
said predefined geographic region (502, 504, 520, 522) is smaller than the geographical area covered by a beam (401-416) and said common information is related to said predefined geographic region (502, 504, 520, 522);
and **in that** the apparatus comprises:
means for generating a list (600) identifying a plurality of common data channels over which the common information will be transmitted from the gateway (120, 122) to said predetermined geographic region (502, 504, 520, 522), wherein said list (600) changes over time due to the orbiting of the satellites (116, 118) and is specific to said predefined geographic region (502, 504, 520, 522);
means for transmitting the common information on said plurality of common data channels (602, 604, 610); and
means for receiving, at a user terminal (124, 126, 420, 422, 424), the common information over at least one of said plurality of common data channels (602, 604, 610).

22. The apparatus of claim 21, wherein said list (600) includes, for each of said plurality of common data channels (602, 604, 610), information identifying a predetermined satellite (116, 118), beam (401-416), frequency, and channel.

23. The apparatus of claim 21, further comprising means for registering said user terminal (124, 126, 420, 422, 424) with the gateway (120, 122).

24. The apparatus of claim 23, wherein said means for registering further comprises means for transmitting, from said user terminal (124, 126, 420, 422, 424) to the gateway (120, 122), an access probe, on an access channel, to thereby register said user terminal (124, 126, 420, 422, 424) with the gateway (120, 122) and to provide the gateway (120, 122) with said user terminal's location.

25. The apparatus of claim 23, further comprising means for transmitting, from the gateway (120, 122) to said user terminal (124, 126, 420, 422, 424), identities of one or more common data channels of said plurality of common data channels (602, 604, 610).

26. The apparatus of claim 25, wherein said identities of one or more common data channels (602, 604, 610) are transmitted on a paging channel.

27. The apparatus of claim 25, further comprising means for acquiring, at the user terminal (124, 126, 420, 422, 424), at least one of said plurality of common data channels (602, 604, 610) using said identities of one or more common data channels (602, 604, 610).

28. The apparatus of claim 27, further comprising means for multiplexing, at the gateway (120, 122), a portion of said list (600) with party line data to thereby produce the common information, wherein said portion of said list (600) is applicable to said user terminal (124, 126, 420, 422, 424) for a predetermined amount of time and changes over time due to the orbiting of the satellites (116, 118).

29. The apparatus of claim 27, wherein the common information includes a portion of said list (600) which is applicable to said user terminal (124, 126, 420, 422, 424) for a predetermined amount of time and changes over time due to the orbiting of the satellites (116, 118).

30. The apparatus of claim 29, further comprising means for acquiring one or more additional common data channels of said plurality of common data channels (602, 604, 610) at said user terminal (124, 126, 420, 422, 424) by using said portion of said list (600), as signals of said additional common data channels come into range of said user terminal (124, 126, 420, 422, 424).

31. The apparatus of claim 30, further comprising means for dropping common data channels as their signals go out of range of said user terminal (124, 126, 420, 422, 424).

32. The apparatus of claim 30, further comprising means for receiving, at said user terminal (124, 126, 420, 422, 424), the common information from said one or more additional common data channels (602, 604, 610).

33. The apparatus of claim 32, further comprising means for combining signals received over said acquired common data channels (602, 604, 610) to thereby more accurately reproduce the common information.

34. The apparatus of claim 33, wherein said means for combining includes a maximal ratio combiner (812).

35. The apparatus of claim 33, wherein a first common data channel of said acquired common data channels(602, 604, 610) is transmitted on a beam (401-416) of a satellite (116, 118) and a second common data channel of said acquired common data channels (602, 604, 610) is transmitted on a different beam (401-416) of said satellite (116, 118).

36. The apparatus of claim 33, wherein a first common data channel of said acquired common data channels (602, 604, 610) is transmitted on a beam (401-416) of a satellite and a second common data channel of said acquired common data channels (602, 604, 610) is transmitted on a different beam (401-416) of a different satellite (116, 118), and further comprising a means for time aligning, at said user terminal (124, 126, 420, 422, 424), signals received on said first common data channel with signals received on said second common data channel, prior to said combining step.

37. The apparatus of claim 33, wherein said means for time aligning comprises a deskew buffer (808A to 808N).

38. The apparatus of claim 33, wherein a beam (401-416) strength of one of said acquired common data channels (602, 604, 610) is insufficient to accurately reproduce the common data information.

39. The apparatus of claim 30, wherein a first common data channel is transmitted on a beam (401-416) of a satellite (116,118) and wherein said means for acquiring additional common data channels (602, 604, 610) selects at least one of said additional common data channels (602, 604, 610)from a beam (401-416) of a different satellite (116, 118) to thereby provide diversity.

40. The apparatus of claim 21, further comprising means for reducing a power of at least one of said plurality of common data channels (602, 604, 610) over time.

41. The apparatus of claim 40, further comprising means for increasing the power of said at least one of said plurality of common data channels (602, 604, 610) when the gateway (120, 122) receives an indication that the power is too low.

## Patentansprüche

1. Ein Verfahren zum Vorsehen von gemeinsamer Information (common information) an eine Vielzahl von Benutzerterminals (124, 126, 420, 422, 424) innerhalb einer vordefinierten geographischen Region (502, 504, 520, 522), in einem Satellitenkommunikationssystem mit einem Gateway (120, 122) und einer Vielzahl von Satelliten (116, 118), die die Erde so umkreisen, dass sie nicht stationär bezüglich eines Punktes auf der Oberfläche der Erde sind, wobei jeder der Vielzahl von Satelliten (116, 118) Strahlen bzw. Beams (401-416) besitzen, die verschiedene geographische Gebiete in vordefinierten Strahlmustern abdecken, **dadurch gekennzeichnet dass**:
die vordefinierte geographische Region (502, 504, 520, 522) kleiner als die geographische Fläche ist, die durch einen Strahl (401-416) abgedeckt ist, und die gemeinsame Information in Beziehung steht zu der vordefinierten geographischen Region (502, 504, 520, 522);
und **dadurch gekennzeichnet, dass** Verfahren die folgenden Schritte aufweist:
Generieren einer Liste (600), die eine Vielzahl von gemeinsamen Datenkanälen (602, 604, 610) identifiziert, über die die gemeinsame Information von dem Gateway (120, 122) zu der vordefinierten geographischen Region (502, 504, 520, 522) gesendet wird, wobei die Liste (600) sich zeitlich aufgrund der Umkreisung bzw. Umlaufbahn der Satelliten (116, 118) verändert und wobei die Liste spezifisch ist für die vordefinierte geographische Region (502, 504, 520, 522);
Senden der gemeinsamen Information auf der Vielzahl von gemeinsamen Datenkanälen (602, 604, 610); und
Empfangen an einem Benutzerterminal (124, 126, 420, 422, 424), der gemeinsamen Information über zumindest einen der Vielzahl von gemeinsamen Datenkanälen (602, 604, 610).

2. Verfahren nach Anspruch 1, wobei die Liste (600) für jede der Vielzahl von gemeinsamen Datenkanälen (602, 604, 610) Information enthält, die einen vorbestimmten Satelliten (116, 118), Strahl (410-416), Frequenz und Kanal identifiziert.

3. Verfahren nach Anspruch 1, das weiterhin den Schritt des Registrierens des Benutzerendgeräts bzw. Terminals (124, 126, 420, 422, 424) mit dem Gateway (120, 122) aufweist.

4. Verfahren nach Anspruch 3, wobei der Registrierungsschritt weiterhin folgenden Schritt aufweist: Senden, und zwar von dem Benutzerterminal (124, 126, 420, 422, 424) zu dem Gateway (120, 122), eine Zugriffsprobe (access probe) auf einem Zugriffskanal, um hierdurch den Benutzerterminal (124, 126, 420, 422, 424) mit bzw. bei dem Gateway (120, 122) zu Registrieren und um das Gateway (120, 122) mit der Position des Benutzerterminals zu versorgen.

5. Verfahren nach Anspruch 3, das weiterhin den folgenden Schritt aufweist: Senden, und zwar von dem Gateway (120, 122) zu dem Benutzerterminal (124, 126, 420, 422, 424) einer oder mehrerer Identitäten von einem oder mehreren Datenkanälen (602, 604, 610) der Vielzahl von gemeinsamen Datenkanälen (602, 604, 610).

6. Verfahren nach Anspruch 5, wobei die Identitäten von einem oder mehreren gemeinsamen Datenkanälen (602, 604, 610) auf einem Paging-Kanal gesendet werden.

7. Verfahren nach Anspruch 5, das weiterhin den Schritt des Aquirierens an dem Benutzerterminal (124, 126, 420, 422, 424) von zumindest einem der Vielzahl von gemeinsamen Datenkanälen (602, 604, 610) unter Verwendung der Identitäten von einem mehreren gemeinsamen Datenkanälen (602, 604, 610) aufweist.

8. Verfahren nach Anspruch 7, das weiterhin den folgenden Schritt aufweist: Multiplexieren, an dem Gateway (120, 122) eines Teils der Liste (600) mit Leitungsdaten eines Beteiligten (party line data) um hierdurch die gemeinsamen Information zu erzeugen, wobei der Teil der Liste (600) durch das Benutzerterminal (124, 126, 420, 422, 424) für einen vorbestimmten Zeitbetrag anwendbar bzw. gültig ist und sich zeitlich aufgrund der Umlaufbahn der Satelliten (116, 118) verändert.

9. Verfahren nach Anspruch 7, wobei die gemeinsamen Information einen Teil der Liste (600) beinhaltet, der für das Benutzerterminal (124, 126, 420, 422, 424) für einen vorbestimmten Zeitbetrag anwendbar ist und der sich zeitlich aufgrund der Umlaufbahn bzw. Erdumkreisung der Satelliten (116, 118) verändert.

10. Verfahren nach Anspruch 9, das weiterhin den folgenden Schritt aufweist: Akquirieren einer oder mehrerer zusätzlicher gemeinsamen Datenkanälen (602, 604, 610) der Vielzahl von gemeinsamen Datenkanälen (602, 604, 610) an dem Benutzerterminal (124, 126, 420, 422, 424) unter Verwendung des erwähnten Teils der Liste (600), und zwar wenn Signale der zusätzlichen gemeinsamen Datenkanälen (602, 604, 610) in die Reichweite bzw. Bereich des Benutzerterminal (124, 126, 420, 422, 424) gelangen.

11. Verfahren nach Anspruch 10, das weiterhin folgende Schritte aufweist: Fallenlassen von gemeinsamen Datenkanälen (602, 604, 610) wenn die Signale die Reichweite des Benutzerterminal (124, 126, 420, 422, 424) verlassen.

12. Verfahren nach Anspruch 10, das weiterhin den folgenden Schritt aufweist: Empfangen, an dem Benutzerterminal (124, 126, 420, 422, 424) der gemeinsamen Information von dem einen oder mehreren zusätzlichen gemeinsamen Datenkanälen (602, 604, 610).

13. Verfahren nach Anspruch 10, das weiterhin den folgenden Schritt aufweist: Kombinieren von Signalen, die über die akquirierten gemeinsamen Datenkanäle (602, 604, 610) empfangen wurden, um hierdurch die gemeinsamen Information genauer zu reproduzieren.

14. Verfahren nach Anspruch 13, wobei der Schritt des Kombinierens Maximalverhältniskombinieren (maximal ratio combining) beinhaltet.

15. Verfahren nach Anspruch 13, wobei ein erster gemeinsamer Datenkanal der akquirierten gemeinsamen Datenkanälen (602, 604, 610) auf einem Strahl (401-416) eines Satelliten (116, 118) gesendet wird und ein zweiter gemeinsamer Datenkanal der akquirierten gemeinsamen Datenkanälen (602, 604, 610) auf einem unterschiedlichen Strahl (401-416) des Satelliten (116, 118) gesendet wird.

16. Verfahren nach Anspruch 13, wobei ein erster gemeinsamer Datenkanal der akquirierten gemeinsamen Datenkanälen (602, 604, 610) auf einem Strahl (401-416) eines Satelliten (116, 118) gesendet wird und ein zweiter gemeinsamer Datenkanal der akquirierten gemeinsamen Datenkanälen (602, 604, 610) auf einem unterschiedlichen Strahl (401-416) eines unterschiedlichen Satelliten (116, 118) gesendet wird, und wobei das Verfahren weiterhin folgenden Schritt aufweist: zeitliches Ausrichten, und zwar an dem Benutzerterminal (124, 126, 420, 422, 424) von Signalen, die auf dem ersten gemeinsamen Datenkanal empfangen werden, mit Signalen, die auf dem zweiten gemeinsamen Datenkanal empfangen werden, und zwar vor dem Schritt des Kombinierens.

17. Verfahren nach Anspruch 13, wobei eine Strahlstärke von einem der akquirierten gemeinsamen Datenkanälen (602, 604, 610) nicht ausreicht, um akkurat die gemeinsame Dateninformation zu reproduzieren.

18. Verfahren nach Anspruch 10, wobei ein erster gemeinsamer Datenkanal auf einem Strahl (401-416) eines Satelliten (116, 118) gesendet wird, wobei der Schritt des Akquirierens zusätzlicher gemeinsamer Datenkanäle (602, 604, 610) das Auswählen zumindest einer der zusätzlichen gemeinsamen Datenkanälen (602, 604, 610) aus einem Strahl (401-416) eines unterschiedlichen Satelliten (116, 118) enthält um hierdurch eine Diversity bzw. Vielfalt vorzusehen.

19. Verfahren nach Anspruch 1, das weiterhin den Schritt des Reduzierens der Leistung zumindest einer der Vielzahl von gemeinsamen Datenkanälen (602, 604, 610) über die Zeit hinweg aufweist.

20. Verfahren nach Anspruch 19, das weiterhin den folgenden Schritt aufweist: Erhöhen der Leistung zumindest einer der Vielzahl von gemeinsamen Datenkanälen (602, 604, 610), wenn das Gateway (120, 122) einen Hinweis erhält, das die Leistung zu niedrig ist.

21. Eine Vorrichtung zum Vorsehen gemeinsamer Information an eine Vielzahl von Benutzerterminals (124, 126, 420, 422, 424) innerhalb einer vordefinierten geographischen Region (502, 504, 520, 522),
in einem Satellitenkommunikationssystem mit einem Gateway (120, 122) und einer Vielzahl von Satelliten (116, 118), die so die Erde umkreisen, dass sie nicht stationär bezüglich eines Punktes auf der Oberfläche der Erde sind, wobei jede der Vielzahl von Satelliten (116, 118) Strahlen (401-416) besitzen, die verschiedene geographische Flächen in vordefinierten Strahlmustern abdecken, **dadurch gekennzeichnet dass** die vordefinierte geographische Region (502, 504, 520, 522) kleiner sind als die geographische Fläche, die durch einen Strahl (401-416) abgedeckt ist und die gemeinsame Information in Beziehung steht zu der vordefinierten geographischen Region (502, 504, 520, 522); und
**dadurch gekennzeichnet, dass** die Vorrichtung Folgendes aufweist:
Mittel zum Generieren einer Liste (600), die eine Vielzahl von gemeinsamen Datenkanälen identifiziert, über die gemeinsame Information von dem Gateway (120, 122) zu der vordefinierten geographischen Region (502, 504, 520, 522) gesendet werden wird, wobei die Liste (600) sich über die Zeit hinweg aufgrund der Erdumkreisung der Satelliten (116, 118) verändert und spezifisch ist für die vordefinierte geographische Region (502, 504, 520, 522);
Mittel zum Senden der gemeinsamen Information auf der Vielzahl von gemeinsamen Datenkanälen (602, 604, 610); und
Mittel zum Empfangen an dem Benutzerterminal (124, 126, 420, 422, 424) der gemeinsamen Information über zumindest einen der Vielzahl von gemeinsamen Datenkanälen (602, 604, 610).

22. Vorrichtung nach Anspruch 21, wobei die Liste (600) für jeden der Vielzahl von gemeinsamen Datenkanälen (602, 604, 610) Information enthält, die einen vorbestimmten Satelliten (116, 118), einen Strahl (401-416), eine Frequenz und einen Kanal identifiziert.

23. Vorrichtung nach Anspruch 21, die weiterhin Mittel aufweist zum Registrieren des Benutzerterminals (124, 126, 420, 422, 424) mit dem Gateway (120, 122).

24. Vorrichtung nach Anspruch 23, wobei die Mittel zum Registrieren weiterhin Mittel aufweisen zum Senden von dem Benutzerterminal (124, 126, 420, 422, 424) zu dem Gateway (120, 122), einer Zugriffsprobe auf einen Zugriffskanal bzw. Access-Kanal, um hierdurch den Benutzerterminal (124, 126, 420, 422, 424) bei dem Gateway (120, 122) zu registrieren und um das Gateway (120, 122) mit der Benutzerterminalposition zu versorgen.

25. Vorrichtung nach Anspruch 23, die weiterhin Mittel aufweist zum Senden, von dem Gateway (120, 122) zu dem Benutzerterminal (124, 126, 420, 422, 424), von Identitäten von einem oder mehreren gemeinsamen Datenkanälen der Vielzahl von gemeinsamen Datenkanälen (602, 604, 610).

26. Vorrichtung nach Anspruch 25, wobei die Identitäten einer oder mehrerer gemeinsamer Datenkanäle (602, 604, 610) auf einem Paging-Kanal gesendet werden.

27. Vorrichtung nach Anspruch 25, die weiterhin Mittel aufweist zum Akquirieren, an dem Benutzerterminal (124, 126, 420, 422, 424) zumindest eines Datenkanals einer Vielzahl von gemeinsamen Datenkanälen (602, 604, 610) unter Verwendung der erwähnten Identitäten einer oder mehrerer gemeinsamer Datenkanäle (602, 604, 610).

28. Vorrichtung nach Anspruch 27, die weithin Mittel aufweist zum Multiplexen bzw. Multiplexieren, an dem Gateway (120, 122), eines Teils der Liste (600) mit Leitungsdaten eines Beteiligten, um hierdurch die gemeinsame Information zu erzeugen, wobei der Teil der Liste (600) auf das Benutzerterminal (124, 126, 420, 422, 424) für einen vorbestimmten Zeitbetrag anwendbar ist und wobei sich die Liste (600) über die Zeit hinweg aufgrund der Erdumkreisung der Satelliten (116, 118) verändert.

29. Vorrichtung nach Anspruch 27, wobei die gemeinsame Information einen Teil der Liste (600) enthält, der auf das Benutzerterminal (124, 126, 420, 422, 424) für einen vorbestimmten Zeitbetrag anwendbar ist und sich über die Zeit hinweg verändert aufgrund der Umkreisung der Satelliten (116, 118).

30. Vorrichtung nach Anspruch 29, die weiterhin Mittel aufweist zum Akquirieren einer oder mehrerer zusätzlicher gemeinsamer Datenkanäle der Vielzahl von gemeinsamen Datenkanälen (602, 604, 610) an dem Benutzerterminal (124, 126, 420, 422, 424) unter Verwendung des Teils der Liste (600), und zwar wenn Signale der zusätzlichen gemeinsamen Datenkanäle in die Reichweite des Benutzerterminals (124, 126, 420, 422, 424) gelangen.

31. Vorrichtung nach Anspruch 30, die weiterhin Mittel aufweist zum Fallenlassen gemeinsamer Datenkanäle, wenn deren Signale außerhalb der Reichweite des Benutzerterminals (124, 126, 420, 422, 424) gelangen.

32. Vorrichtung nach Anspruch 30, die weiterhin Mittel aufweist zum Empfangen, an dem Benutzerterminal (124, 126, 420, 422, 424), der gemeinsamen Information von dem einen oder mehreren zusätzlichen gemeinsamen Datenkanälen (602, 604, 610).

33. Vorrichtung nach Anspruch 32, die weiterhin Mittel aufweist zum Kombinieren von Signalen, die über die akquirierten gemeinsamen Datenkanälen (602, 604, 610) empfangen werden, um hierdurch genauer die gemeinsamen Informationen zu reproduzieren.

34. Vorrichtung nach Anspruch 33, wobei die Mittel zum Kombinieren einen Maximalverhältniskombinierer (812) beinhalten.

35. Vorrichtung nach Anspruch 33, wobei ein erster gemeinsamer Datenkanal der akquirierten gemeinsamen Datenkanälen (602, 604, 610) auf einen Strahl (401-416) eines Satelliten (116, 118) gesendet wird und ein zweiter gemeinsamer Datenkanal der akquirierten gemeinsamen Datenkanälen (602, 604, 610) auf einem unterschiedlichen Strahl (401-416) des Satelliten (116, 118) gesendet wird.

36. Vorrichtung nach Anspruch 33, wobei ein erster gemeinsamer Datenkanal der akquirierten gemeinsamen Datenkanäle (602, 604, 610) auf einen Strahl (401-416) eines Satelliten (116, 118) gesendet wird und ein zweiter gemeinsamer Datenkanal der akquirierten gemeinsamen Datenkanälen (602, 604, 610) auf einem unterschiedlichen Strahl (401-416) eines unterschiedlichen Satelliten (116, 118) gesendet wird, und wobei die Vorrichtung weiterhin Mittel aufweist zum zeitlichen Ausrichten an dem Benutzerterminal (124, 126, 420, 422, 424), von Signalen, die auf dem ersten gemeinsamen Datenkanal empfangen werden, mit Signalen, die auf dem zweiten gemeinsamen Datenkanal empfangen werden, und zwar vor dem Schritt des Kombinierens.

37. Vorrichtung nach Anspruch 33, wobei die Mittel zum zeitlichen Ausrichten einem Deskew- bzw. Entzerrpuffer (808A bis 808N) aufweist.

38. Vorrichtung nach Anspruch 33, wobei eine Strahlstärke (401-416) einer der akquirierten gemeinsamen Datenkanälen (602, 604, 610) nicht ausreichend ist, um die gemeinsame Dateninformation genau zu reproduzieren.

39. Vorrichtung nach Anspruch 30, wobei ein erster gemeinsamer Datenkanal auf einem Strahl (401-416) eines Satelliten (116, 118) gesendet wird, und wobei die Mittel zum Akquirieren zusätzlicher gemeinsamer Datenkanäle (602, 604, 610) zumindest einen der zusätzlichen gemeinsamen Datenkanäle (602, 604, 610) von einem Strahl (401-416) eines unterschiedlichen Satelliten (116, 118) auswählt, um hierdurch eine Diversity bzw. Vielfalt vorzusehen.

40. Vorrichtung nach Anspruch 21, die weiterhin Mittel aufweist zum Reduzieren einer Leistung zumindest einer der Vielzahl von gemeinsamen Datenkanälen (602, 604, 610) und zwar über die Zeit hinweg.

41. Vorrichtung nach Anspruch 40, die weiterhin Mittel aufweist zum Erhöhen der Leistung des zumindest einen der Vielzahl von gemeinsamen Datenkanälen (602, 604, 610), wenn das Gateway (120, 122) eine Anzeige bzw. Hinweis darauf erhält, dass die Leistung zu niedrig ist.

## Revendications

1. Procédé de fourniture d'informations communes à une pluralité de terminaux d'utilisateurs (124, 126, 420, 422, 424) dans une région géographique prédéterminée (502, 504, 520, 522), dans un système de communication par satellite comportant un portail (120, 122) et une pluralité de satellites (116, 118) qui orbitent de sorte qu'ils ne sont pas stationnaires par rapport à un point de la surface terrestre, chacun de la pluralité de satellites (116, 118) ayant des faisceaux (401-416) couvrant des régions géographiques différentes selon des motifs de faisceaux prédéterminés, **caractérisé en ce que** :
la région géographique prédéterminée (502, 504, 520, 522) est plus petite que la zone géographique couverte par un faisceau (401-416) et les informations communes sont liées à la région géographique prédéterminée (502, 504, 520, 522) ;
et **en ce que** le procédé comprend les étapes suivantes :
produire une liste (600) identifiant une pluralité de canaux de données communs (602, 604, 610) sur lesquels les informations communes seront transmises à partir du portail (120, 122) vers la région géographique prédéterminée (502, 504, 520, 522), la liste (600) changeant au cours du temps en raison du placement sur orbite des satellites (116, 118) et étant spécifique de la région géographique prédéterminée (502, 504, 520, 522) ;
émettre des informations communes sur la pluralité de canaux de données communs (602, 604, 610) ; et
recevoir, au niveau d'un terminal d'utilisateur (124, 126, 420, 422, 424), les informations communes sur au moins un de la pluralité de canaux de données communs (602, 604, 610).

2. Procédé selon la revendication 1, dans lequel la liste (600) comprend, pour chacun de la pluralité de canaux de données communs (602, 604, 610), des informations identifiant un satellite (116, 118) prédéterminé, un faisceau (401-416), une fréquence, et un canal.

3. Procédé selon la revendication 1, comprenant en outre l'étape consistant à enregistrer le terminal d'utilisateur (124, 126, 420, 422, 424) par le portail (120, 122).

4. Procédé selon la revendication 3, dans lequel l'étape d'enregistrement comprend en outre l'étape d'émission, à partir du terminal d'utilisateur (124, 126, 420, 422, 424) vers le portail (120, 122), d'une impulsion d'accès, sur un canal d'accès, pour enregistrer ainsi le terminal d'utilisateur (124, 126, 420, 422, 424) par le portail (120, 122) et pour fournir au portail (120, 122) l'emplacement du terminal d'utilisateur.

5. Procédé selon la revendication 3, comprenant en outre l'étape consistant à émettre à partir du portail (120, 122) vers le terminal d'utilisateur (124, 126, 420, 422, 424), les identités d'un ou plusieurs canaux de données communs (602, 604, 610) de la pluralité de canaux de données communs (602, 604, 610).

6. Procédé selon la revendication 5, dans lequel les identités d'un ou plusieurs canaux de données communs (602, 604, 610) sont émises sur un canal d'appel.

7. Procédé selon la revendication 5, comprenant l'étape consistant à acquérir, au niveau du terminal d'utilisateur (124, 126, 420, 422, 424), au moins un de la pluralité de canaux de données communs (602, 604, 610) en utilisant les identités d'un ou plusieurs canaux de données communs (602, 604, 610).

8. Procédé selon la revendication 7, comprenant en outre l'étape de multiplexage, au niveau du portail (120, 122), d'une partie de la liste (600) avec des données de ligne de partie pour produire les informations communes, ladite partie de ladite liste (600) pouvant s'appliquer au terminal d'utilisateur (124, 126, 420, 422, 424) pendant une durée prédéterminée et changeant au cours du temps en raison du parcours sur orbite des satellites (116, 118).

9. Procédé selon la revendication 7, dans lequel les informations communes comprennent une partie de la liste (600) qui s'applique au terminal d'utilisateur (124, 126, 420, 422, 424) pendant une durée prédéterminée et change au cours du temps par suite du déplacement sur orbite des satellites (116, 118).

10. Procédé selon la revendication 9, comprenant en outre l'étape consistant à acquérir un ou plusieurs canaux de données communs supplémentaires (602, 604, 610) de la pluralité de canaux de données communs (602, 604, 610) au niveau du terminal d'utilisateur (124, 126, 420, 422, 424) en utilisant ladite partie de la liste (600) tandis que les signaux des canaux de données communs supplémentaires (602, 604, 610) viennent dans la plage du terminal d'utilisateur (124, 126, 420, 422, 424).

11. Procédé selon la revendication 10, comprenant en outre l'étape consistant à laisser tomber les canaux de données communs (602, 604, 610) quand leurs signaux sortent de la plage du terminal d'utilisateur (124, 126, 420, 422, 424).

12. Procédé selon la revendication 10, comprenant en outre l'étape consistant à recevoir, au niveau du terminal d'utilisateur (124, 126, 420, 422, 424), les informations communes à partir d'un ou plusieurs canaux de données communs supplémentaires (602, 604, 610).

13. Procédé selon la revendication 10, comprenant en outre l'étape consistant à combiner les signaux reçus sur les canaux de données communs acquis (602, 604, 610) pour reproduire avec plus de précision les informations communes.

14. Procédé selon la revendication 13, dans lequel l'étape de combinaison comprend une combinaison à un taux maximum.

15. Procédé selon la revendication 13, dans lequel un premier canal de données commun parmi les canaux de données communs (602, 604, 610) acquis est transmis sur un faisceau (401-416) d'un satellite (116, 118), et un second canal de données commun des canaux de données communs acquis (602, 604, 610) est émis sur un faisceau différent (401-416) du satellite (116, 118).

16. Procédé selon la revendication 13, dans lequel un premier canal de données commun des canaux de données communs acquis (602, 604, 610) est émis sur un faisceau (401-416) d'un satellite (116, 118) et un second canal de données commun des canaux de données communs acquis (602, 604, 610) est émis sur un faisceau différent (401, 416) d'un satellite (116, 118) différent, et comprenant en outre l'étape consistant à aligner dans le temps, au niveau du terminal d'utilisateur (124, 126, 420, 422, 424), des signaux reçus sur le premier canal de données commun avec des signaux reçus sur le second canal de données commun, avant l'étape de combinaison.

17. Procédé selon la revendication 13, dans lequel l'intensité de faisceau de l'un des canaux de données communs acquis (602, 604, 610) est insuffisante pour reproduire avec précision les informations de données communes.

18. Procédé selon la revendication 10, dans lequel un premier canal de données commun est émis sur un faisceau (401-416) d'un satellite (116, 118) et dans lequel l'étape d'acquisition de canaux de données communs supplémentaires (602, 604, 610) comprend la sélection d'au moins un des canaux de données communs supplémentaires (602, 604, 610) à partir d'un faisceau (401, 416) d'un satellite différent pour assurer ainsi une diversité.

19. Procédé selon la revendication 1, comprenant en outre l'étape consistant à réduire la puissance d'au moins l'un de la pluralité de canaux de données communs (602, 604, 610) au cours du temps.

20. Procédé selon la revendication 19, comprenant en outre l'étape consistant à augmenter la puissance dudit au moins un de la pluralité de canaux de données communs (602, 604, 610) quand le portail (120, 122) reçoit une indication selon laquelle la puissance est trop faible.

21. Dispositif de fourniture d'informations communes à une pluralité de terminaux d'utilisateurs (124, 126, 420, 422, 424) dans une région géographique prédéterminée (502, 504, 520, 522), dans un système de communication par satellite comportant un portail (120, 122) et une pluralité de satellites (116, 118) qui orbitent de sorte qu'ils ne sont pas stationnaires par rapport à un point de la surface terrestre, chacun de la pluralité de satellites (116, 118) ayant des faisceaux (401-416) couvrant des régions géographiques différentes selon des motifs de faisceaux prédéterminés, **caractérisé en ce que** :
la région géographique prédéterminée (502, 504, 520, 522) est plus petite que la zone géographique couverte par un faisceau (401, 416) et les informations communes sont liées à la région géographique prédéterminée (502, 504, 520, 522) ;
et **en ce que** le dispositif comprend :
un moyen pour produire une liste (600) identifiant une pluralité de canaux de données communs sur lesquels les informations communes seront transmises à partir du portail (120, 122) vers la région géographique prédéterminée (502, 504, 520, 522), la liste (600) changeant au cours du temps en raison du placement sur orbite des satellites (116, 118) et étant spécifique de la région géographique prédéterminée (502, 504, 520, 522) ;
un moyen pour émettre des informations communes sur la pluralité de canaux de données communs (602, 604, 610) ; et
un moyen pour recevoir, au niveau d'un terminal d'utilisateur (124, 126, 420, 422, 424), les informations communes sur au moins un de la pluralité de canaux de données communs (602, 604, 610).

22. Dispositif selon la revendication 21, dans lequel la liste (600) comprend, pour chacun de la pluralité de canaux de données communs (602, 604, 610), des informations identifiant un satellite (116, 118) prédéterminé, un faisceau (401-416), une fréquence, et un canal.

23. Dispositif selon la revendication 21, comprenant en outre un moyen pour enregistrer le terminal d'utilisateur (124, 126, 420, 422, 424) par le portail (120, 122).

24. Dispositif selon la revendication 23, dans lequel l'étape d'enregistrement comprend en outre un moyen d'émission, à partir du terminal d'utilisateur (124, 126, 420, 422, 424) vers le portail (120, 122), d'une impulsion d'accès, sur un canal d'accès, pour enregistrer ainsi le terminal d'utilisateur (124, 126, 420, 422, 424) par le portail (120, 122) et pour fournir au portail (120, 122) l'emplacement du terminal d'utilisateur.

25. Dispositif selon la revendication 23, comprenant en outre un moyen pour émettre à partir du portail (120, 122) vers le terminal d'utilisateur (124, 126, 420, 422, 424), les identités d'un ou plusieurs canaux de données communs de la pluralité de canaux de données communs (602, 604, 610).

26. Dispositif selon la revendication 25, dans lequel les identités d'un ou plusieurs canaux de données communs (602, 604, 610) sont émises sur un canal d'appel.

27. Dispositif selon la revendication 25, comprenant un moyen pour acquérir, au niveau du terminal d'utilisateur (124, 126, 420, 422, 424), au moins un de la pluralité de canaux de données communs (602, 604, 610) en utilisant les identités d'un ou plusieurs canaux de données communs (602, 604, 610).

28. Dispositif selon la revendication 27, comprenant en outre un moyen de multiplexage, au niveau du portail (120, 122), d'une partie de la liste (600) avec des données de ligne de partie pour produire les informations communes, ladite partie de ladite liste (600) pouvant s'appliquer au terminal d'utilisateur (124, 126, 420, 422, 424) pendant une durée prédéterminée et changeant au cours du temps en raison du parcours sur orbite des satellites (116, 118).

29. Dispositif selon la revendication 27, dans lequel les informations communes comprennent une partie de la liste (600) qui s'applique au terminal d'utilisateur (124, 126, 420, 422, 424) pendant une durée prédéterminée et change au cours du temps par suite du déplacement sur orbite des satellites (116, 118).

30. Dispositif selon la revendication 29, comprenant en outre un moyen pour acquérir un ou plusieurs canaux de données communs supplémentaires de la pluralité de canaux de données communs (602, 604, 610) au niveau du terminal d'utilisateur (124, 126, 420, 422, 424) en utilisant la partie de la liste (600) tandis que les signaux des canaux de données communs supplémentaires viennent dans la plage du terminal d'utilisateur (124, 126, 420, 422, 424).

31. Dispositif selon la revendication 30, comprenant en outre un moyen pour laisser tomber les canaux de données communs quand leurs signaux sortent de la plage du terminal d'utilisateur (124, 126, 420, 422, 424).

32. Dispositif selon la revendication 30, comprenant en outre un moyen pour recevoir, au niveau du terminal d'utilisateur (124, 126, 420, 422, 424), les informations communes à partir d'un ou plusieurs canaux de données communs supplémentaires (602, 604, 610).

33. Dispositif selon la revendication 32, comprenant en outre un moyen pour combiner les signaux reçus sur les canaux de données communs acquis (602, 604, 610) pour reproduire avec plus de précision les informations communes.

34. Dispositif selon la revendication 33, dans lequel le moyen de combinaison comprend un combinateur à taux maximum (812).

35. Dispositif selon la revendication 33, dans lequel un premier canal de données commun parmi les canaux de données communs (602, 604, 610) acquis est transmis sur un faisceau (401-416) d'un satellite (116, 118), et un second canal de données commun des canaux de données communs acquis (602, 604, 610) est émis sur un faisceau différent (401-416) du satellite (116, 118).

36. Dispositif selon la revendication 33, dans lequel un premier canal de données commun des canaux de données communs acquis (602, 604, 610) est émis sur un faisceau (401-416) d'un satellite et un second canal de données commun des canaux de données communs acquis (602, 604, 610) est émis sur un faisceau différent (401-416) d'un satellite (116, 118) différent, et comprenant en outre un moyen pour aligner dans le temps, au niveau du terminal d'utilisateur (124, 126, 420, 422, 424), des signaux reçus sur le premier canal de données commun avec des signaux reçus sur le second canal de données commun, avant l'étape de combinaison.

37. Dispositif selon la revendication 33, dans lequel le moyen pour aligner dans le temps comprend un tampon de suppression d'effet d'alignement (808A-808N).

38. Dispositif selon la revendication 33, dans lequel l'intensité de faisceau (401-416) de l'un des canaux de données communs acquis (602, 604, 610) est insuffisante pour reproduire avec précision des informations de données communes.

39. Dispositif selon la revendication 30, dans lequel un premier canal de données commun est émis sur un faisceau (401-416) d'un satellite (116, 118) et dans lequel le moyen d'acquisition de canaux de données communs supplémentaires (602, 604, 610) sélectionne au moins un des canaux de données communs supplémentaires (602, 604, 610) à partir d'un faisceau (401-416) d'un satellite différent (116, 118) pour assurer ainsi une diversité.

40. Dispositif selon la revendication 21, comprenant en outre un moyen pour réduire la puissance d'au moins l'un de la pluralité de canaux de données communs (602, 604, 610) au cours du temps.

41. Dispositif selon la revendication 40, comprenant en outre un moyen pour augmenter la puissance dudit au moins un de la pluralité de canaux de données communs (602, 604, 610) quand le portail (120, 122) reçoit une indication selon laquelle la puissance est trop faible.
